# EUROPÄISCHE PATENTSCHRIFT

(11) **EP 4 255 661 B1**
(45) Veröffentlichungstag und Bekanntmachung des Hinweises auf die Patenterteilung: **20.11.2024**
(21) Anmeldenummer: 21824327.7
(22) Anmeldetag: 01.12.2021
(51) Int. Cl.: B23K 9/067

(54) **VERFAHREN UND VORRICHTUNG ZUR ENERGIEBEGRENZUNG BEIM ZÜNDEN EINES LICHTBOGENS**
METHOD AND DEVICE FOR LIMITIMG THE ARC IGNITION ENERGY
MÉTHODE ET DISPOSITIF DE LIMITATION DE L'ÉNERGIE LORS DE L'ALLUMAGE D'UN ARC

(30) Priorität: 02.12.2020 EP 20211316
(43) Veröffentlichungstag der Anmeldung: 11.10.2023
(73) Patentinhaber: FRONIUS INTERNATIONAL GmbH, 4643 Pettenbach (AT)
(72) Erfinder: PRINZ, Andreas, 4600 Wels-Thalheim (AT); AUMAIR, Stefan, 4600 Wels-Thalheim (AT); HOFMANNINGER, Franz, 4600 Wels-Thalheim (AT); MUSS, Michael, 4600 Wels-Thalheim (AT)
(74) Vertreter: Patentanwälte Pinter & Weiss OG
(86) Internationale Anmeldenummer: PCT/EP2021/083682
(87) Internationale Veröffentlichungsnummer: WO 2022/117605

(56) Entgegenhaltungen:
- WO-A1-2012/162582
- AT-B- 413 953

## Beschreibung

Die gegenständliche Erfindung betrifft ein Verfahren zum sicheren Betrieb eines Schweißgeräts, wobei auf einer Niederspannungsseite des Schweißgeräts auftretende Niederspannungspulse in auf einer Hochspannungsseite des Schweißgeräts auftretende Hochspannungspulse transformiert werden, wobei während eines Zündbetriebs unter Verwendung der Hochspannungspulse an einer Elektrode ein Lichtbogen gezündet wird. Weiters betrifft die gegenständliche Erfindung eine Energiebegrenzungseinheit für ein Schweißgerät mit einer Niederspannungsseite und einer Hochspannungsseite und ein Schweißgerät umfassend eine Niederspannungsquelle, welche ausgestaltet ist, auf der Niederspannungsseite Niederspannungspulse zu generieren, und umfassend eine Transformiereinheit zum Wandeln der auf der Niederspannungsseite generierten Niederspannungspulse auf Hochspannungspulse an einer Hochspannungsseite, zum Zünden eines Lichtbogens zwischen einer Elektrode und einem Werkstück an der Hochspannungsseite und umfassend eine erfindungsgemäße Energiebegrenzungseinheit.

In manchen Schweißgeräten werden Niederspannungspulse in Hochspannungspulse transformiert. Diese Hochspannungspulse beinhalten meist eine Energie von 100 Mikrojoule (µJ) bis zu 10 Joule (J) und werden während eines Zündvorgangs zum Zünden eines Lichtbogens an einer Elektrode verwendet. Nach dem Zündvorgang wird bei einem brennenden Lichtbogen ein eigentlicher Schweißvorgang durchgeführt, wobei hier natürlich gegenüber dem Zündbetrieb eine weitaus größere Energiemenge an den Elektroden auftritt. Die AT 413 953 B offenbart ein Verfahren zum berührungslosen Zünden eines Lichtbogens unter Verwendung von zu Pulspaketen zusammengefassten Zündpulsen. Dadurch wird die beim Zündvorgang abgegebene Energiemenge grundlegend geringgehalten. Die WO 2012/162582 A1 beschreibt eine Überwachung einer während des Schweißprozesses an das Werkstück abgegebene Energiemenge.

Es ist eine Aufgabe der gegenständlichen Erfindung ein Verfahren zum sicheren Betrieb eines Schweißgeräts und eine Energiebegrenzungseinheit für ein Schweißgerät anzugeben.

Diese Aufgabe wird erfindungsgemäß gelöst, indem im Zündbetrieb ein von einem Anfangszeitpunkt bis zu einem Endzeitpunkt reichendes Zeitfenster vorgesehen ist, wobei während des Zeitfensters eine an der Elektrode auftretende Zündenergiemenge ermittelt und mit einem Energiegrenzwert verglichen wird, wobei bei einem Überschreiten des Energiegrenzwerts eine Aktion ausgelöst wird, um im Zeitfenster weitere Zündenergie an der Elektrode zu verhindern. Weiters wird die Aufgabe mittels einer Energiebegrenzungseinheit gelöst, wobei die Energiebegrenzungseinheit eine Energieermittlungseinheit umfasst, welche ausgestaltet ist, in einem Zündbetrieb des Schweißgeräts während eines Zeitfensters, welches von einem Anfangszeitpunkt bis zu einem Endzeitpunkt reicht, eine an einer Elektrode auftretende Zündenergiemenge zu ermitteln. Die Energiebegrenzungseinheit umfasst eine Energievergleichseinheit, welche ausgestaltet ist, die Zündenergiemenge mit einem vorgegebenen Energiegrenzwert zu vergleichen. Die Energiebegrenzungseinheit umfasst weiters eine Blockiereinheit, welche ausgestaltet ist, bei einem Überschreiten des Energiegrenzwerts eine Aktion auszulösen, um im Zeitfenster weitere Zündenergie an der Elektrode zu verhindern. Zudem wird die Aufgabe durch ein Schweißgerät gelöst, welches eine Niederspannungsquelle umfasst, wobei die Niederspannungsquelle ausgestaltet ist, auf der Niederspannungsseite Niederspannungspulse zu generieren und umfassend eine Transformiereinheit zum Wandeln der Niederspannungspulse auf an einer Hochspannungsseite anliegende Hochspannungspulse zum Zünden eines Lichtbogens und umfassend eine erfindungsgemäße Energiebegrenzungseinheit, wobei die Blockiereinheit ausgestaltet ist, durch die Aktion im Zeitfenster ein Auftreten weiterer Zündenergie an der Elektrode zu verhindern, indem im Zeitfenster weitere Niederspannungspulse auf der Niederspannungsseite und/oder Hochspannungspulse auf der Hochspannungsseite und/oder Hilfsspannungspulse auf der Hochspannungsseite zu verhindern. Vorzugsweise liegt der Energiegrenzwert für eine definierte Zeitdauer im Bereich von 0,01 bis 100 Joule, bevorzugt von 0,1 bis 10 Joule, besonders bevorzugt von 0,5 Joule bis 5 Joule. Ferner kann auch ein Energiegrenzwert von 4 Joule pro Sekunde angestrebt werden.

Damit kann im Zündbetrieb und/oder im Leerlaufbetrieb, und/oder vorzugsweise im Schweißbetrieb, sichergestellt werden, dass die an den Elektroden vorgesehene Zündenergiemenge einen Energiegrenzwert nicht überschreitet, womit verhindert werden kann, dass ein Benutzer des Schweißgeräts beim Zündvorgang einen gefährlichen bzw. gesundheitsschädlichen Stromschlag erhält, wenn er die Elektrode berührt bzw. mit dieser in Kontakt tritt. Im Gegensatz zum Schweißbetrieb ist es während eines Zündbetriebs oder eines Leerlaufbetriebs für den Schweißer wahrscheinlich, auf der Hochspannungsseite mit den Hochspannungspulsen in Kontakt zu kommen, da diese an der Elektrode des Schweißbrenners anliegen, obgleich ggf. kein Lichtbogen auftritt. Ein direkter Kontakt des Schweißers mit den Niederspannungspulsen auf der Niederspannungsseite ist hingegen unwahrscheinlich, da diese nur innerhalb des Schweißgeräts abgegriffen werden können. Im Falle des Schweißbetriebs sind an der Elektrode auftretende Hochspannungspulse (und gegebenenfalls Hilfsspannungspulse, siehe unten) für den Schweißer weniger kritisch, da die Energie über das Werkstück nahezu vollständig abfließt und es unwahrscheinlich ist, dass der Schweißer in den brennenden Lichtbogen greift. Ferner kann eine Energiebegrenzung unter gewissen Umständen auch im Schweißbetrieb erwünscht sein, weshalb auch im Schweißbetrieb geprüft werden kann, ob die Zündenergie den Energiegrenzwert überschreitet und bei Überschreitung eine Aktion ausgelöst werden kann. Unter einem Schweißbetrieb versteht man einen zwischen einer Elektrode und einem Werkstück zumindest zeitweise aufrechten Lichtbogen, welcher in das Werkstück oder auf die Werkstückoberfläche eine derartig hohe Energie einbringt, sodass es zu einer Aufschmelzung der Werkstückoberfläche, d.h. zu einer Gefüge-Veränderung der Werkstückoberfläche oder zumindest zu einer allgemeinen Veränderung der Werkstückoberfläche kommt. Ferner versteht man unter einem Schweißbetrieb eine Energieeinbringung in ein Werkstück mit einer Leistung größer 100 Joule/Sekunde, größer 10 Joule/Sekunde, oder größer 4 Joule/Sekunde. Vorzugsweise brennt der Lichtbogen dem während des Schweißbetriebs bereits, wogegen im Zündbetrieb der Lichtbogen gezündet wird. Unter einem Zündbetrieb versteht man die erstmalige Erzeugung einer Ionisationsstrecke und/oder die erstmalige Erzeugung eines Lichtbogens zwischen einer Elektrodenspitze und einem Werkstück, sowie nach Erlöschen eines Lichtbogens, die abermalige Erzeugung einer Ionisationsstrecke und/oder die abermalige Erzeugung eines Lichtbogens zwischen einer Elektrodenspitze und einem Werkstück. Ferner versteht man unter einem Zündbetrieb eine Energieeinbringung in ein Werkstück und/oder eine Energieeinbringung in eine Gasstrecke mit einer Leistung kleiner gleich 4 Joule/Sekunde. Ein Leerlaufbetrieb beschreibt die Zeit zwischen der erreichten Schweißbereitschaft eines Schweißgeräts und der Einleitung des Zündbetriebs. Die Zündenergiemenge kann in einer Hardwareeinheit und/oder in einer Softwareeinheit ermittelt werden. Die Ermittlung der Zündenergiemenge wird vorzugweise auf eine Mehrzahl an Arten ermittelt, um durch Redundanz eine hohe Sicherheit zu gewährleisten.

Vorzugsweise wird während des Zeitfensters eine Hochspannungsenergiemenge der Hochspannungspulse aufsummiert und die Hochspannungsenergiemenge verwendet, um die an der Elektrode auftretende Zündenergiemenge zu ermitteln. Dies kann beispielswiese mittels einer Integration der im Zeitfenster auftretenden Hochspannungspulse erfolgen.

Weiters kann die Energiemenge eines Niederspannungspulses vorgegeben werden und die während des Zeitfensters auftretenden Hochspannungspulse gezählt und mit der Energiemenge eines Niederspannungspulses multipliziert werden, um die während des Zeitfensters aufsummierte Hochspannungsenergiemenge zu ermitteln. Vorzugsweise wird angenommen, dass die Hochspannungsenergiemenge der Zündenergiemenge entspricht (insbesondere, wenn keine Hilfsspannungspulse vorgesehen sind, siehe unten). Eine Anzahl von Hochspannungspulsen können zu Hochspannungspulspaketen zusammengefasst werden, wobei ein Hochspannungspuls eine Zeitdauer von einigen Nanosekunden bis zu mehreren Mikrosekunden betragen kann. Somit kann die gesamte Energiemenge eines Niederspannungspulspakets und folglich eines Hochspannungspulspakets bekannt sein. Damit kann wiederum während des Zeitfensters die Anzahl der Niederspannungspulspakete gezählt werden um die aufsummierte Hochspanungsenergiemenge zu ermitteln.

Besonders vorteilhaft ist es, wenn während des Zeitfensters eine Niederspannungsenergiemenge der Niederspannungspulse aufsummiert und die Niederspannungsenergiemenge verwendet wird, um die an der Elektrode auftretende Energiemenge zu ermitteln. Die Niederspannungspulse umfassen im selben Zeitraum (abgesehen von Verlusten, welche kalkulierbar und/oder berechenbar und/oder konstant sind) den gleichen Energieinhalt wie die zugehörigen Hochspannungspulse. Damit ist eine Ermittlung der an der Elektrode anliegenden Hochspannungsenergiemenge durch Messung der an der Niederspannungsseite auftretenden Niederspannungsenergiemenge möglich. Damit kann die Niederspannungsenergiemenge verwendet werden, um die Zündenergiemenge zu ermitteln. Vorzugsweise wird angenommen, dass die Niederspannungsenergiemenge der Zündenergiemenge entspricht (insbesondere, wenn keine Hilfsspannungspulse vorgesehen sind, siehe unten). Eine Messung der Niederspannungsenergiemenge auf der Niederspannungsseite ist kostengünstiger und weniger störanfällig als eine Messung der (äquivalenten) Hochspannungsenergiemenge auf der Hochspannungsseite. Hochspannungspulse können Spannungen im Bereich von 1 kV bis 50 kV, z.B. ca. 10 kV, aufweisen. Die Ermittlung der Niederspannungsenergiemenge kann z.B. durch Integration der Niederspannungspulse im Zeitfenster ermittelt werden.

Vorzugsweise wird die Energiemenge eines Niederspannungspulses vorgegeben, die während des Zeitfensters auftretenden Niederspannungspulse gezählt und mit der Energiemenge eines Niederspannungspulses multipliziert, um die während des Zeitfensters aufsummierte Niederspannungsenergiemenge zu ermitteln. Damit ist eine exakte Ermittlung der Niederspannungsenergiemenge während des Zeitfensters möglich.

Zur Ermittlung der Niederspannungsenergiemenge kann für die Niederspannungspulse auch eine Energiemenge pro Zeiteinheit vorgegeben werden. Eine Zeiteinheit kann hierbei als physikalische Einheit zur Zeitmessung als Sekunde s, als Millisekunde ms, oder bevorzugt auch als Mikrosekunde µs vorgegeben werden. Ist innerhalb eines Zeitfensters die Summe der Pulsdauern aller im Zeitfenster auftretenden Niederspannungspulse bekannt, kann zur Ermittlung der Niederspannungsenergiemenge im Zeitfenster die Summe der Pulsdauern der Niederspannungspulse im Zeitfenster mit der vorgegebenen Energiemenge pro Zeiteinheit multipliziert werden. Zur Ermittlung der Pulsdauern der Niederspannungspulse kann die Pulsdauer jedes einzelnen Niederspannungspulses im Zeitfenster softwaretechnisch und/oder hardwaretechnisch ermittelt und somit bestimmt oder gemessen werden. Die Energiemenge pro Zeiteinheit kann hierbei bevorzugt in der Einheit J/µs angegeben werden.

Werden eine Anzahl von Hochspannungspulse zu Hochspannungspulspaketen zusammengefasst, so können entsprechend auch die Niederspannungspulse zu Niederspannungspulspaketen zusammengefasst werden. Ist die Energiemenge eines Niederspannungspulspakets bekannt, so kann während des Zeitfensters die Anzahl der Niederspannungspulspakete gezählt werden, um die während des Zeitfensters aufsummierte Niederspannungsenergiemenge zu ermitteln.

Als Aktion kann die Generierung weiterer Niederspannungspulse blockiert werden, womit wiederum eine Generierung von Hochspannungspulsen blockiert wird. Hierzu kann die Blockiereinheit derart ausgestaltet sein, als Aktion die Erzeugung weiterer Niederspannungspulse zu blockieren. Die Blockiereinheit kann so ausgestaltet sein, dass aktiv in eine zur Erzeugung der Niederspannungspulse und folglich auf die Hochspannungspulse vorgesehene Pulserzeugungseinheit eingegriffen wird, um die Erzeugung der Niederspannungspulse zu blockieren. Damit kann sichergestellt werden, dass im Zeitfenster keine weiteren Niederspannungspulse auftreten. Es können für den Schweißbetrieb dieselben oder auch andere Energiegrenzwerte vorgesehen sein, als für einen Zündbetrieb. Auch kann der Energiegrenzwert für den Zündbetrieb ein anderer sein, als für den Leerlaufbetrieb. Auch können sich die auszulösenden Aktionen für Schweißbetrieb, Zündbetrieb und Leerlaufbetrieb unterscheiden, wobei durch die unterschiedlichen Aktionen jeweils im Zeitfenster ein Auftreten weiterer Zündenergie an der Elektrode verhindert wird.

Die Aufsummierung der Niederspannungsenergiemenge und/oder der Vergleich mit dem Niederspannungsenergiegrenzwert und/oder das Auslösen der Aktion kann deaktiviert werden, wenn sich das Schweißgerät in einem Schweißbetrieb befindet. Es kann aber auch vorgesehen sein, dass die Aufsummierung der Niederspannungsenergiemenge und/oder der Vergleich mit dem Niederspannungsenergiegrenzwert und/oder das Auslösen der Aktion aktiviert ist, wenn sich das Schweißgerät in einem Schweißbetrieb befindet.

Es kann eine Detektionseinheit vorgesehen sein, welche ausgestaltet ist, einen Schweißbetrieb des Schweißgeräts von einem Zündbetrieb und/oder einem Leerlaufbetrieb des Schweißgeräts zu unterscheiden und die Energieermittlungseinheit und/oder die Energievergleichseinheit und/oder die Blockiereinheit im Schweißbetrieb gegebenenfalls zu deaktivieren und im Zündbetrieb und/oder im Leerlaufbetrieb gegebenenfalls zu aktivieren.

Eine Zündung oder eine Wiederzündung eines Lichtbogens erfolgt durch die an der Elektrode erzeugten Hochspannungspulse. Nach erfolgtem Zündvorgang wird an der Elektrode eine Schweißspannung angelegt, wodurch ein Schweißstrom fließt. Da während des Schweißvorgangs eine hohe Leistungsabgabe erwünscht ist, könnte die Energiebegrenzung im Schweißbetrieb deaktiviert werden.

Eine Unterscheidung unterschiedlicher Betriebszustände des Schweißgeräts (Schweißbetrieb, Zündbetrieb, Leerlaufbetrieb, ...) kann durch eine Auswertung des Stromflusses, eines Gesamtstromflusses und/oder eines Hilfsstromflusses, sehr schnell und genau getroffen werden. Zusätzlich kann die Auswertung direkt an einem dem Schweißgerät zugeordneten Wechselrichter erfolgen, wodurch der Betriebszustand ohne zusätzliche Verzögerung erkannt und die Sicherheitsfunktion der Energiebegrenzungseinheit sofort aktiviert werden kann. Durch die Messung des Stromflusses in der Detektionseinheit kann somit ebenfalls der Zeitpunkt der erfolgten Zündung des Lichtbogens ermittelt werden. Somit kann die Energiebegrenzung des Gesamtsystems auf den sicherheitsrelevanten Zeitpunkt beschränkt werden. Im Vergleich zur Prozessstrommessung und/oder Prozessspannungsmessung, welche in der Regel außerhalb des Wechselrichters stattfindet, ist eine direkte Strom- und/oder Spannungsmessung direkt im Wechselrichter deutlich vorteilhafter, in Bezug auf die Geschwindigkeit der Messung, der Messdatenauswertung und der Störanfälligkeit einer Messung. Dadurch wird eine Messung in dieser Form auch für sicherheitskritische und sicherheitsrelevante Anwendungen vorzugsweise verwendet.

Ist das Schweißgerät jedoch für ein Wechselspannungsschweißen ausgelegt, so weist ein an der Elektrode auftretender Schweißstrom einen, vorzugsweiseperiodisch auftretenden, Nulldurchgang auf. Um zu verhindern, dass während des Nulldurchgangs der Lichtbogen abreißt, kann eine zusätzliche Hilfsspannung, insbesondere eine Hilfsgleichspannung, vorgesehen sein, welche z.B. 200 bis 300V betragen kann. Bei einem Gleichspannungsschweißen tritt während des Schweißvorgangs in der Regel kein Nulldurchgang auf, bei welchem der Lichtbogen erlöschen könnte. Somit sind bei Schweißgeräten, ausgestaltet zum Gleichspannungsschweißen üblicherweise keine Hilfsspannungspulse vorgesehen. Hilfsspannungspulse liegen wie die Hochspannungspulse an der Elektrode des Schweißbrenners an, wodurch diese während des Zündbetriebs und/oder des Leerlaufbetriebs gleichermaßen dem Schweißer zugänglich sind.

Bei Multiprozess-Schweißgeräten, die mehr als nur einen Schweißprozess beherrschen, wie Lichtbogenhandschweißprozesse (E-Hand-Schweißen), MIG/MAG-Schweißprozesse (Metall-Inertgasschweißen/ Metall-Aktivgasschweißen) oder WIG-Schweißprozesse (Wolfram-Inertgas-Schweißen), ist es ebenso denkbar, eine Hilfsspannungsquelle zum Gleichspannungsschweißen zu verwenden. Auf diese Weise kann beispielsweise die Stabilität bei Prozesswechseln erhöht werden, beispielsweise bei einem Wechsel von Gleichspannungsschweißen zu Wechselspannungsschweißen. Durch die Verwendung einer Hilfsspannungsquelle zum Gleichspannungsschweißen kann insbesondere beim MIG/MAG Schweißen aber auch einem Abreißen eines Lichtbogens entgegengewirkt werden.

Vorzugsweise werden Hilfsspannungspulse auf die Hochspannungsseite eingebracht, um das Zünden eines Lichtbogens zu unterstützen, wobei während des Zeitfensters eine Hilfsspannungsenergiemenge der Hilfsspannungspulse aufsummiert wird, um eine Hilfsspannungsenergiemenge zu ermitteln, und wobei die Hilfsspannungsenergiemenge verwendet wird, um die an der Elektrode auftretende Zündenergiemenge zu ermitteln. Durch das Auslösen der Aktion werden im Zeitfenster weitere Hilfsspannungspulse verhindert.

Es kann insbesondere für Wechselspannungsschweißen bezüglich der Verwendung von Hilfsspannungspulsen, zwischen der Zündung des Lichtbogens und dem Aufrechterhalten des Lichtbogens bei einem Nulldurchgang, unterschieden werden, um sicherzustellen, dass die Begrenzung der Hilfsspannungsenergiemenge nur im sicherheitsrelevanten Zeitfenster, d.h. während einer Zündung und nicht während einem Nulldurchgang, stattfindet.

Zur Erzeugung der Hilfsspannungspulse kann das Schweißgerät mindestens eine Hilfsspannungsquelle umfassen. Die Hilfsspannungspulse können eine Zündung des Lichtbogens verbessern und liegen z.B. in einem Bereich von 100 V bis 1 kV, bevorzugt in einem Bereich von 200 V bis 300 V. Die Hilfsspannungspulse haben eine Zeitdauer von mehreren Mikrosekunden bis mehrere Millisekunden.

Ferner kann die Pulsdauer eines Hilfsspannungspulses softwaremäßig oder hardwaremäßig begrenzt werden, sodass die Pulsdauer eines Hilfsspannungspulses beispielsweise höchstens 40 µs im Zündbetrieb und/oder beispielsweise höchstens 600 µs im Schweißbetrieb beträgt.

Sind Hilfsspannungspulse vorgesehen, so ist es vorteilhaft, wenn die Zündenergiemenge aus der Summe der Hilfsspannungsenergiemenge und der Hochspannungsenergiemenge oder aus der Summe der Hilfsspannungsenergiemenge und der Niederspannungsenergiemenge ermittelt wird.

Die Hilfsspannungspulse können mit den Hochspannungspulsen zeitlich synchronisiert, vorzugsweise überlagert, werden. Ferner können die Hochspannungspulse mit den Hilfsspannungspulsen zeitlich synchronisiert, vorzugsweise überlagert, werden. Damit kann ein Aufrechterhalten des Lichtbogens im Nulldurchgang des Schweißstroms begünstigt werden. Zur Synchronisierung kann ein Feedbacksignal zwischen der Hochfrequenz-(HF)-Zündeinheit und der Hilfsspannungsquelle verwendet werden. Dies hat den Vorteil, dass für die Synchronisation keine Spannungsmessung benötigt wird, womit auch keine Störgrößen oder vermeidbaren Verzögerungen auftreten. Das Feedbacksignal kann beispielsweise bei jeder Ansteuerung der Hochfrequenz-(HF)-Zündeinheit erzeugt und an den Wechselrichter und folglich an die Hilfsspannungsquelle gesendet werden. Der Wechselrichter kennt vorzugsweise die Verzögerungszeiten der Umladevorgänge der Hochfrequenz-(HF)-Zündeinheit und kennt auch seine eigenen Durchlaufzeiten und die Verzögerungszeiten der Hilfsspannungsquelle und kann dadurch synchron zu den Hochfrequenzpulsen die Hilfsspannungsquelle aktivieren. Ferner könnte auch hier wiederum die Hochspannungsquelle zur Hilfsspannungsquelle synchron aktiviert werden. Es Ist vorteilhaft, wenn sämtliche Verzögerungszeiten bei der Erzeugung der Hochfrequenzpulse und bei der Erzeugung der Hilfsspannungspulse berücksichtigt werden (Printlaufzeiten, Schaltvorgänge, ...), bis die entsprechende Spannung tatsächlich an der Elektrode anliegt, um eine genaue Synchronisation zu ermöglichen. Es ist somit möglich, je nach Anwendung die Hilfsspannungsquelle so zu starten, dass ein Hochfrequenzpuls kurz vor, kurz nach oder während der Hilfsspannungsbeaufschlagung positioniert werden kann und die Zündeigenschaften dem Anwendungsfall entsprechend optimiert werden können.

Es kann die Energiemenge eines Hilfsspannungspulses vorgegeben werden, wobei die während des Zeitfensters auftretenden Hilfsspannungspulse gezählt und mit der Energiemenge eines Hilfsspannungspulses multipliziert werden, um die während des Zeitfensters aufsummierte Hilfsspannungsenergiemenge zu ermitteln. Die Hilfsspannungsenergiemenge kann auch durch Integration der Hilfsspannungspulse im Zeitfenster ermittelt werden.

Auch für die Hilfsspannungspulse ist es zur Berechnung der Hilfsspannungsenergiemenge möglich, eine Energiemenge pro Zeiteinheit vorzugeben, beispielsweise ebenso in der Einheit J/ps. Um die durch die Hilfsspannungspulse transportierte Hilfsspannungsenergiemenge zu ermitteln, können softwaretechnisch und/oder hardwaretechnisch die Pulsdauern der gegebenen Hilfsspannungspulse ermittelt werden und damit die Summe der Pulsdauern der in einem Zeitfenster auftretenden Hilfsspannungspulse bestimmt werden. Die durch die Hilfsspannungspulse transportierte Hilfsspannungsenergiemenge in einem Zeitfenster kann damit durch Multiplikation der Summe der Pulsdauern der in einem Zeitfenster auftretenden Hilfsspannungspulse mit der vorgegebenen Energiemenge pro Zeiteinheit berechnet werden.

Als Aktion kann auch die Generierung weiterer Hilfsspannungspulse im Zeitfenster blockiert werden, z.B. indem eine Hilfsspannungsquelle deaktiviert wird.

Es kann auch aus einer Differenz des Energiegrenzwerts und der Zündenergiemenge im Zeitfenster eine Restenergiemenge ermittelt werden und anhand der Restenergiemenge ermittelt werden, ob durch eine ausgelöste Aktion weitere Hilfsspannungspulse und/oder Hochspannungspulse im Zeitfenster verhindert werden.

Die Aufsummierung der Hilfsspannungsenergiemenge und/oder der Vergleich mit dem Hilfsspannungsenergiegrenzwert und/oder das Auslösen der weiteren Aktion kann deaktiviert werden, wenn sich das Schweißgerät in einem Schweißbetrieb befindet.

Die Energiebegrenzungseinheit kann als eigenständiges Element, aber auch integraler Bauteil des Schweißgeräts oder als integraler Bestandteil von Schweißkomponenten wie z.B. einem Wechselrichter oder einer Hochfrequenz-(HF)-Zündeinheit ausgeführt sein.

Energieermittlungseinheit(en) und/oder Energievergleichseinheit(en) und/oder Blockiereinheit(en) können integraler Bestandteil einer Energiebegrenzungseinheit sein oder verteilt angeordnet sein.

Es ist besonders vorteilhaft, wenn das Zeitfenster kontinuierlich verschoben wird, sodass der Endzeitpunkt dem aktuellen Zeitpunkt entspricht. Damit wird kontinuierlich die Energiemenge der Niederspannungspulse während des zum aktuellen Zeitpunkt endenden Zeitfensters ermittelt, d.h. gewissermaßen um das Zeitfenster in die Vergangenheit geschaut. Das kann in einfacher Weise erreicht werden, indem die Niederspannungspulse zumindest über die Dauer des Zeitfensters aufgezeichnet werden. Man erhält somit eine Echtzeitmessung einer Energiemenge pro Beobachtungszeitraum. Die Beobachtungszeiträume liegen vorzugsweise im Bereich von 0,01 bis 60 Sekunden, bevorzugt im Bereich von 0,25 bis 5 Sekunden und besonders bevorzugt im Bereich von 0,5 bis 2 Sekunden. Ferner können auch Beobachtungszeiträume von 1 Sekunde angestrebt werden.

Es ist besonders vorteilhaft, wenn vor dem Überschreiten des Energiegrenzwerts die aktuell im Zeitfenster auftretende Zündenergiemenge ermittelt wird und auf Basis der Zündenergiemenge bereits vorab eine Generierung von Niederspannungspulsen und/oder von Hilfsspannungspulsen blockiert wird. So kann es bei einer Zündenergiemenge, welche weit vom Energiegrenzwert entfernt ist, vorteilhaft sein, statt einer Blockierung von weiteren Niederspannungspulsen und von Hilfsspannungspulsen lediglich die Generierung von Niederspannungspulsen oder von Hilfsspannungspulsen zu blockieren, wenn es ausreichend wahrscheinlich ist, dass der Energiegrenzwert auch im letzteren Fall nicht erreicht wird.

Die gegenständliche Erfindung wird nachfolgend unter Bezugnahme auf die Figuren 1a bis 5d näher erläutert, die beispielhafte, schematische und nicht einschränkende vorteilhafte Ausgestaltungen der Erfindung zeigen. Dabei zeigt
Fig.1a einen schematischen Aufbau einer Energiebegrenzungseinheit umfassend eine Energievergleichseinheit, eine Energieermittlungseinheit und eine Blockiereinheit,
Fig.1b einen schematischen Aufbau einer Hochfrequenz-(HF)-Zündeinheit mit einer Energiebegrenzungseinheit umfassend eine Niederspannungsenergieermittlungseinheit,
Fig.1c einen schematischen Aufbau einer Hilfsspannungsquelle mit einer eigenen Energiebegrenzungseinheit umfassend einer Energieermittlungseinheit,
Fig.2a eine Folge von Hochspannungspulsen auf einer Hochspannungsseite und ein Zeitfenster,
Fig.2b auf einer Hochspannungsseite auftretende Hilfsspannungspulse und ein Zeitfenster,
Fig.2c auf einer Hochspannungsseite auftretende Hochspannungspulse und mit den Hochspannungspulsen zumindest teilweise synchronisierte Hilfsspannungspulse und ein Zeitfenster,
Fig.3 zwei Zeitfenster, in welchen jeweils Hilfsspannungspulse und Hochspannungspulse auftreten und in welchen jeweils ein Energiegrenzwert nicht überschritten wurde,
Fig. 4a ein verschiebbares Zeitfenster zu einem ersten Zeitpunkt, in welchem Hilfsspannungspulse und zueinander synchronisierte Hochspannungspulse auftreten und in welchem ein Energiegrenzwert überschritten worden wäre,
Fig. 4b ein verschiebbares Zeitfenster zu einem zweiten Zeitpunkt, in welchem Hilfsspannungspulse und zueinander synchronisierte Hochspannungspulse auftreten und in welchem ein Energiegrenzwert nicht überschritten wurde,
Fig. 4c ein verschiebbares Zeitfenster zu einem dritten Zeitpunkt, in welchem Hilfsspannungspulse und zueinander synchronisierte Hochspannungspulse auftreten und in welchem ein Energiegrenzwert überschritten worden wäre,
Fig. 5a ein Blockschaltbild einer ersten Ausführungsform der Erfindung,
Fig. 5b ein Blockschaltbild einer zweiten Ausführungsform der Erfindung,
Fig. 5c ein Blockschaltbild einer dritten Ausführungsform der Erfindung,
Fig. 5d einen schematischen Aufbau eines Schweißgeräts.

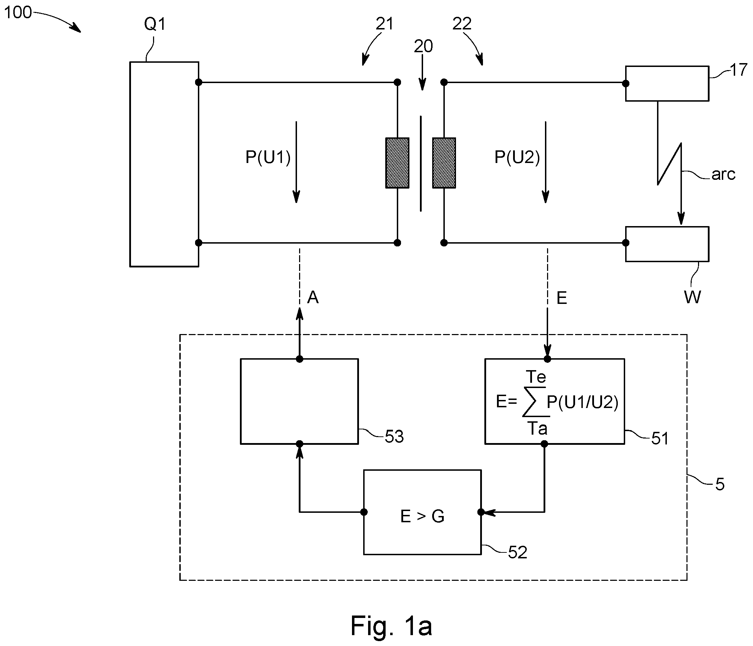

Ein in Fig. 1a schematisch dargestelltes Schweißgerät 100 umfasst eine Niederspannungsquelle Q1, welche ausgestaltet ist, auf einer Niederspannungsseite 21 Niederspannungspulse P(U1) zu generieren. Es kann auch vorgesehen sein, dass die Niederspannungsquelle Q1 eine Niederspannung U1 erzeugt und eine Pulserzeugungseinheit 23 folglich Niederspannungspulse P(U1) aus der Niederspannung U1 erzeugt (in Fig. 1a nicht dargestellt). Das Schweißgerät 100 umfasst weiters eine Transformiereinheit 20 zum Wandeln von Niederspannungspulsen P(U1) hin zu auf an einer Hochspannungsseite 22 anliegenden Hochspannungspulsen P(U2) zum Zünden eines Lichtbogens arc zwischen einer Elektrode 17 und einem Werkstück W. In Fig.1a ist weiters eine erfindungsgemäße Energiebegrenzungseinheit 5 vorgesehen, welche eine Energieermittlungseinheit 51, eine Energievergleichseinheit 52 und eine Blockiereinheit 53 umfasst. Die Energiebegrenzungseinheit 5 ist mit dem Schweißgerät 100 verbindbar, und ausgestaltet in einem Zündbetrieb des Schweißgeräts 100 während eines Zeitfensters T, welches von einem Anfangszeitpunkt Ta bis zu einem Endzeitpunkt Te reicht, eine an einer Elektrode 17 des Schweißgeräts auftretende Zündenergiemenge E zu ermitteln. Die Energievergleichseinheit 52 ist ausgestaltet, die Zündenergiemenge E mit einem vorgegebenen Energiegrenzwert G zu vergleichen. Die Blockiereinheit 53 ist ausgestaltet, bei einem Überschreiten des Energiegrenzwerts G eine Aktion A auszulösen, um im Zeitfenster T ein Auftreten weiterer Zündenergie an der Elektrode 17 zu verhindern. Die Ermittlung der Zündenergiemenge E und das Auslösen der Aktion A sind in Fig. 1a anhand der strichlierten Pfeile lediglich schematisch dargestellt. In den folgenden Figuren werden beispielhafte Ausführungen beschrieben, in welcher Möglichkeiten zur Ermittlung der Zündenergiemenge E und das Auslösen der Aktion A beschrieben werden.

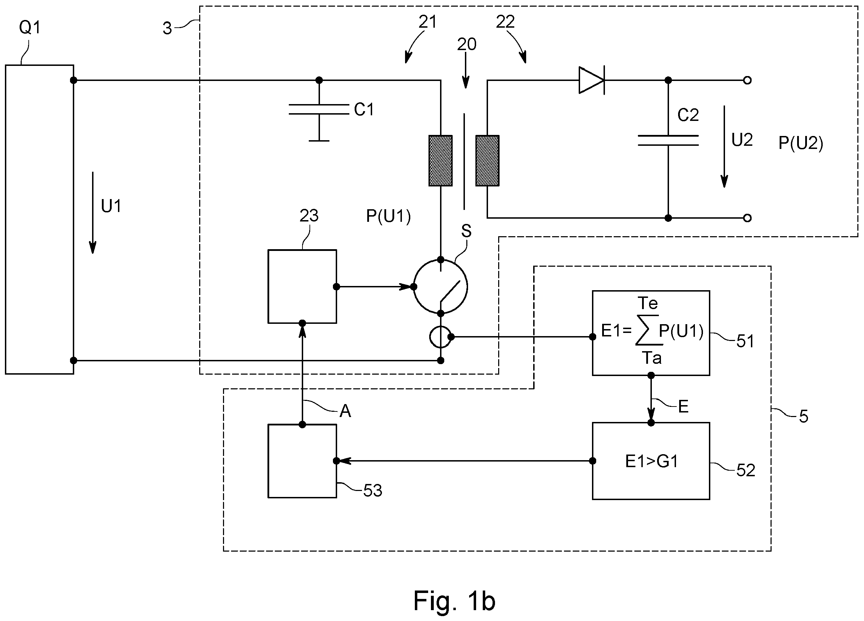

Fig. 1b zeigt eine beispielhafte Hochfrequenz-(HF)-Zündeinheit 3 eines Schweißgeräts 100 zum Erzeugen eines Lichtbogens arc. Es ist in der Hochfrequenz-(HF)-Zündeinheit 3 eine Transformiereinheit 20 vorgesehen, welche grundlegend dazu ausgestaltet ist, eine auf der Niederspannungsseite 21 anliegende Niederspannung U1 (z.B. 24 V) auf eine an einer Hochspannungsseite 22 anliegende Hochspannung U2 (z.B. 9,8 kV) zu transformieren. Es ist zur Erzeugung der Niederspannung U1, auf der Niederspannungsseite 21, eine Niederspannungsquelle Q1 vorgesehen. Es ist weiters eine Pulserzeugungseinheit 23 vorgesehen, welche aus der Niederspannung U1 Niederspannungspulse P(U1) generiert. Dies kann beispielsweise durch einen Schalter S erfolgen, welcher von der Pulserzeugungseinheit 23 angesteuert wird, wie in Fig. 1b angedeutet. An der Niederspannungsseite 21 auftretende Niederspannungspulse P(U1) werden mittels der Transformiereinheit 20 auf die Hochspannungsseite 22 transformiert, womit an der Hochspannungsseite 22 Hochspannungspulse P(U2) entstehen. Unter Verwendung dieser Hochspannungspulse P(U2) wird während eines Zündvorgangs ein Lichtbogen arc zwischen Elektrode 17 und Werkstück W gezündet.

Obgleich in Fig. 1b die Transformiereinheit 20 lediglich als Transformator mit Primärwicklung auf der Niederspannungsseite 21 und einer Sekundärwicklung auf der Hochspannungsseite 22 dargestellt ist, kann die Transformiereinheit 20 natürlich auch weitere Elemente, insbesondere weitere Transformatoren umfassen. An der Niederspannungsseite 21 ist ein Eingangskondensator C1, an der Hochspannungsseite 22 ein Ausgangskondensator C2 vorgesehen.

Es ist dafür Sorge zu tragen, dass die zur Erzeugung des Lichtbogens arc abgegebene Niederspannungsenergiemenge E1 innerhalb eines Zeitfensters T, einen Niederspannungsgrenzwert G1 nicht überschreitet. Zu diesem Zweck ist erfindungsgemäß eine Energiebegrenzungseinheit 5 vorgesehen. Die Energiebegrenzungseinheit 5 umfasst eine Energieermittlungseinheit 51, welche ausgestaltet ist in einem Zündbetrieb oder einem Leerlaufbetrieb in einem Zeitfenster T, welches von einem Anfangszeitpunkt Ta bis zu einem Endzeitpunkt Te reicht, die Niederspannungsenergiemenge E1, welche an die Elektrode 17 geführt wird, zu ermitteln. Weiters umfasst die Energiebegrenzungseinheit 5 eine Energievergleichseinheit 52, welche ausgestaltet ist die Niederspannungsenergiemenge E1 mit einem vorgegebenen Niederspannungsgrenzwert G1 zu vergleichen. Zudem ist in der Energiebegrenzungseinheit 5 eine Blockiereinheit 53 vorgesehen, welche ausgestaltet ist, bei einem Überschreiten eines Niederspannungsgrenzwerts G1 eine Aktion A auszulösen, um während des Zeitfensters T die Erzeugung weiterer Niederspannungspulse P(U1) und in Folge daraus transformierte Hochspannungspulse P(U2) zu verhindern. Damit wird verhindert, dass die Niederspannungsenergiemenge E1 während des Zeitfensters T weiter ansteigt und der Niederspannungsgrenzwert G1 überschritten wird.

In Fig. 1b ist die Energieermittlungseinheit 51 vorteilhafterweise ausgestaltet, die Niederspannungsenergiemenge E1 der Niederspannungspulse P(U1) auf der Niederspannungsseite 21 zu ermitteln. Es ist natürlich in einer anderen Ausführungsart auch vorstellbar, dass die Energieermittlungseinheit 51 ausgestaltet ist, die Hochspannungsenergiemenge E2 der Hochspannungspulse P(U2) auf der Hochspannungsseite 22 zu ermitteln. Weiters ist in Fig. 1b die Blockiereinheit 53 beispielhaft ausgestaltet, auf die Pulserzeugungseinheit 23 zuzugreifen, um die Erzeugung weiterer Niederspannungspulse P(U1) zu blockieren.

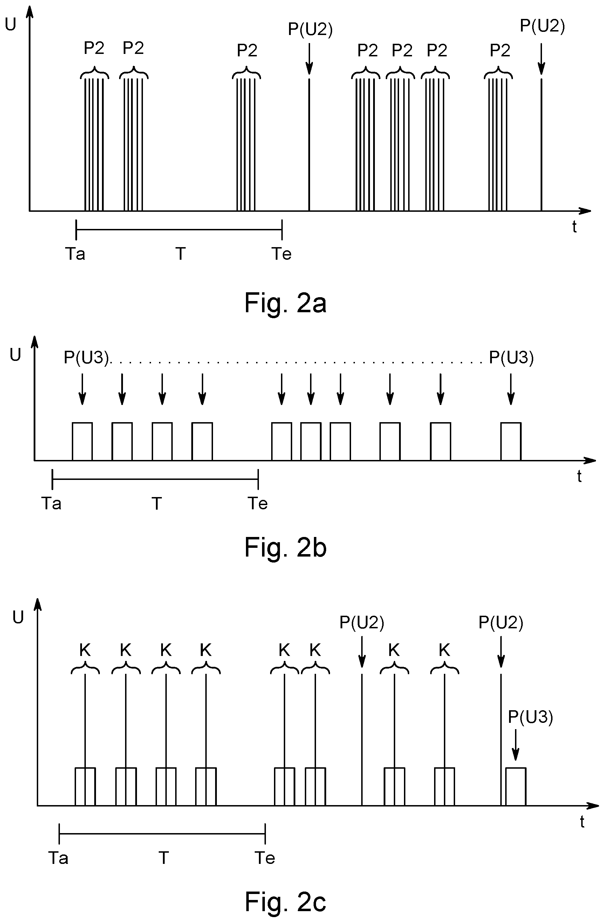

Es können auf der Niederspannungsseite 21 jeweils eine Mehrzahl an Niederspannungspulsen P(U1) zu Niederspannungspulspaketen P1 zusammengefasst werden und auf die Hochspannungsseite 22 transformiert werden, womit auf der Hochspannungsseite 22 Hochspannungspulspakete P2 mit einer Mehrzahl an Hochspannungspulsen P(U2) auftreten. Fig. 2a zeigt eine beispielhafte (geplante) Folge an Hochspannungspulspaketen P2, jeweils bestehend aus Hochspannungspulsen P(U2) sowie einzelne Hochspannungspulse P(U2), welche während eines Zündvorgangs auf der Hochspannungsseite 22 nach einer Transformation von entsprechenden Niederspannungspulspaketen P1, jeweils bestehend aus Niederspannungspulsen P(U1), sowie einzelnen Niederspannungspulsen P(U1), auftreten. Die Hochspannungspulspakete P2 treten beispielsweise mit einer Frequenz von 1 kHz bis zu 100 kHz auf, die Hochspannungspulse P(U2) mit einer Frequenz von beispielsweise 100 kHz bis zu 10 MHz.

Die in Fig. 1b dargestellte Energieermittlungseinheit 51 kann beispielsweise ausgestaltet sein, auf der Niederspannungsseite 21 die Anzahl der Niederspannungspulspakete P1 zu zählen und mit dem Energieinhalt eines Niederspannungspulspakets P1 (z.B. 1 Joule) zu multiplizieren, um die aufsummierte Niederspannungsenergiemenge E1 und damit die Zündenergiemenge E zu erhalten.

Es kann im Schweißgerät 100 zudem eine Hilfsspannungsquelle 10 zur Erzeugung von Hilfsspannungspulsen P(U3), welche zusätzlich auf die Hochspannungsseite 22 aufgebracht werden können, vorgesehen sein. Diese Hilfsspannungspulse P(U3) können dazu dienen, eine Zündung des Lichtbogens arc zu verbessern.

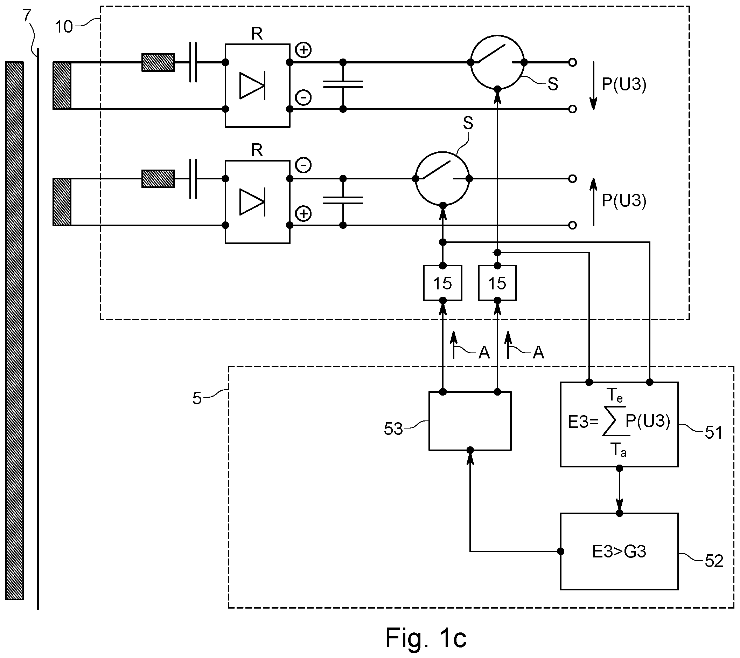

Fig. 1c zeigt eine Ausführungsform der Energiebegrenzungseinheit 5 in Kombination mit einer an einem Schweißtransformator 7 angeordneten Hilfsspannungsquelle 10. In der Hilfsspannungsquelle 10 befinden sich hier zwei Gleichrichter R mit jeweils einer vorgeschalteten Drossel-Kondensator-Kombination zur Strombegrenzung und jeweils einem nachgeschalteten Kondensator zur Glättung und Energiespeicherung. Es sind hier zwei Hilfspulserzeugungseinheiten 15 vorgesehen, welche ausgestaltet sind je einen Schalter S für die Erzeugung eines Hilfsspannungspulses P(U3) zu betätigen. In der Hilfsspannungsquelle 10 sind im Ausführungsbeispiel zwei Gleichrichter R dargestellt, um sowohl negative als auch positive Hilfsspannungspulse P(U3) ausgeben zu können. Eine Energieermittlungseinheit 51 befindet sich in der Energiebegrenzungseinheit 5 und ist derart ausgestaltet, um im Zündbetrieb während des Zeitfensters Teine Hilfsspannungsenergiemenge E3 der Hilfsspannungspulse P(U3) zu ermitteln. Dies erfolgt hier, indem die Hilfsspannungspulse P(U3) aufsummiert werden. Wird die Zündenergiemenge E lediglich durch die Hilfsspannungspulse P(U3) erzeugt, so entspricht die Zündenergiemenge E der Hilfsspannungsenergiemenge E3. Die Energievergleichseinheit 52 ist ausgestaltet, die Hilfsspannungsenergiemenge E3 mit einem vorgegebenen Hilfsspannungsgrenzwert G3 zu vergleichen. Die Blockiereinheit 53 ist ausgestaltet, bei einem Überschreiten des Hilfsspannungsgrenzwerts G3 eine Aktion A auszulösen, um weitere Hilfsspannungspulse P(U3) im Zeitfenster T zu verhindern, was hier durch Zugriff auf die Hilfsspannungsquelle 10 erfolgt.

Treten im Zeitfenster T Niederspannungspulse P(U1) und damit daraus transformierte Hochspannungspulse P(U2) und zusätzlich Hilfsspannungspulse P(U3) auf, so kann sich die Zündenergiemenge E aus der Hilfsspannungsenergiemenge E3 und der Niederspannungsenergiemenge E1 oder aus der Hilfsspannungsenergiemenge E3 und der Hochspannungsenergiemenge E2 zusammensetzen. Beispielsweise würde dies einer Kombination der in Fig. 1b und Fig. 1c beschriebenen Ausgestaltungen entsprechen.

Die Energiebegrenzungseinheit 5 und/oder die Blockiereinheit 53 und/oder die Energieermittlungseinheit 51 und/oder die Energievergleichseinheit 52 können mikroprozessorbasierte Hardware umfassen, beispielsweise einen Computer oder einen Digitalen Signalprozessor (DSP), auf welcher entsprechende Software zum Durchführen der jeweiligen Funktion ausgeführt wird. Die Energiebegrenzungseinheit 5 und/oder die Blockiereinheit 53 und/oder die Energieermittlungseinheit 51 und/oder die Energievergleichseinheit 52 können auch integrierte Schaltungen umfassen, beispielsweise eine anwendungsspezifische integrierte Schaltung (ASIC) oder ein Field Programmable Gate Array (FPGA), oder ein Configurable Programmable Logic Device (CPLD) oder und parallel dazu mit einem Mikroprozessor überwacht werden. Die Energiebegrenzungseinheit 5 und/oder die Blockiereinheit 53 und/oder die Energieermittlungseinheit 51 und/oder die Energievergleichseinheit 52 können aber auch einen analogen Schaltkreis oder analogen Computer umfassen. Auch Mischformen sind denkbar. Ebenso ist es möglich, dass verschiedene Funktionen auf derselben Hardware und/oder auf unterschiedlichen Hardware-Teilen implementiert sind. Besonders vorteilhaft sind Mischformen, bei denen einzelne Einheiten sowohl in Hardware, als auch in Software ausgeführt sind.

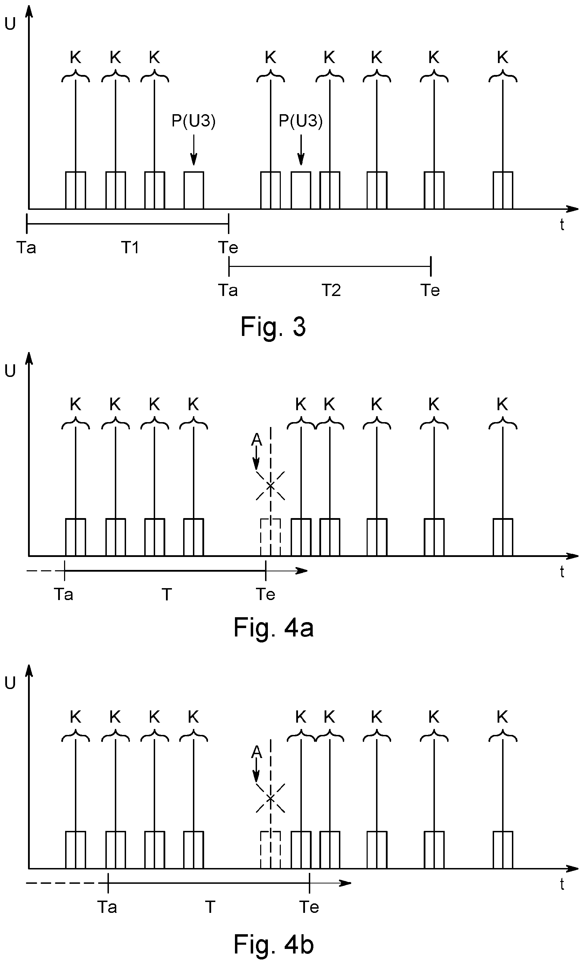

Fig. 2a bis 2c und 4a bis 4c stellen jeweils ein Zeitfenster T dar, welches zum Zeitpunkt Ta beginnt und zum Zeitpunkt Te endet. In Fig. 3 sind zwei Zeitfenster T1 und T2 dargestellt. Als Wert für die Dauer eines Zeitfensters T kann beispielsweise eine Sekunde angenommen werden.

In Fig. 2a treten im Zeitfenster T nur beispielhaft drei Hochspannungspulspakete P2 auf, welche jeweils Hochspannungspulse P(U2) beinhalten. Da die Hochspannungspulspakete P2 aus entsprechenden Niederspannungspulspaketen P1 transformiert werden, sind im Zeitfenster T dieselbe Anzahl an Hochspannungspulspaketen P2 wie Niederspannungspulspaketen P1 und damit auch die gleiche Anzahl Hochspannungspulse P(U2) wie Niederspannungspulse P(U1) vorgesehen. Somit beinhalten die Hochspannungspulse P(U2) im Zeitfenster T eine Hochspannungsenergiemenge E2, welcher der Niederspannungsenergiemenge E1 im selben Zeitfenster T entspricht.

Die Anzahl der auf der Niederspannungsseite 21 im Zeitfenster T auftretenden Niederspannungspulse P(U1) kann beispielsweise mittels der in Fig. 1b dargestellten Ausgestaltung der Energieermittlungseinheit 51 gezählt und mit dem Energieinhalt eines Niederspannungspulses P(U1) (z.B. 1 Joule) multipliziert werden, um die aufsummierte Niederspannungsenergiemenge E1 zu erhalten, welche der Zündenergiemenge E entspricht, wenn lediglich Niederspannungspulse P(U1) und daraus transformierte Hochspannungspulse P(U2), jedoch keine Hilfsspannungspulse P(U3) vorgesehen sind. Es kann aber auch eine Energieermittlungseinheit 51 vorgesehen sein, welche die im Zeitfenster T auf der Hochspannungsseite 22 auftretenden Hochspannungspulse P(U2) zählt und mit dem Energieinhalt eines Hochspannungspulses P(U2) (z.B. 1 Joule) multipliziert, um die aufsummierte Hochspannungsenergiemenge E2 zu erhalten, welche wiederum der Zündenergiemenge E entspricht, wenn lediglich Niederspannungspulse P(U1) und daraus transformierte Hochspannungspulse P(U2), jedoch keine Hilfsspannungspulse P(U3) vorgesehen sind.

In Fig. 2b umfasst das Zeitfenster T eine beispielhafte (geplante) Folge an Hilfsspannungspulsen P(U3). Die Hilfsspannungspulse P(U3) werden während eines Zündvorgangs auf die Hochspannungsseite 22 eingebracht. In der Darstellung sind im Zeitfensters T beispielhaft vier Hilfsspannungspulse P(U3) gezeigt, welche in Summe eine Hilfsspannungsenergiemenge E3 beinhalten.

Die Anzahl der auftretenden Hilfsspannungspulse P(U3) im Zeitfenster T kann beispielsweise mittels der Fig. 1c dargestellten Hilfsspannungsenergieermittlungseinheit 51 direkt an der Hilfsspannungsquelle 10 gezählt und mit dem Energieinhalt eines Hilfsspannungspulses P(U3) (z.B. 1 Joule) multipliziert werden, um die aufsummierte Hilfsspannungsenergiemenge E3 zu erhalten. Die Hilfsspannungsenergiemenge E3 entspricht der Zündenergiemenge E, wenn lediglich Hilfsspannungspulse P(U3), jedoch keine Niederspannungspulse P(U1) und daraus transformierte Hochspannungspulse P(U2) vorgesehen sind.

Fig. 2c stellt eine auf der Hochspannungsseite 22 auftretende Kombination von Hochspannungspulsen P(U2) und Hilfsspannungspulsen P(U3) dar. Des Weiteren sind in Fig. 2c die Hochspannungspulse P(U2) vorteilhafterweise zumindest teilweise mit den Hilfsspannungspulsen P(U3) zeitlich synchronisiert. Ein synchrones Anlegen der Hochspannungspulse P(U2) und Hilfsspannungspulse P(U3) wird als Pulskombination K bezeichnet. Ferner zeigt diese Darstellung in einem Zeitfenster T, vier Pulskombinationen K, d.h. vier Hochspannungspulse P(U2) mit vier dazu synchronisierten Hilfsspannungspulsen P(U3). Die Pulskombinationen K beinhalten im Zeitfenster T eine Zündenergiemenge E, zusammengesetzt aus der Hochspannungsenergiemenge E2 (entsprechend der Niederspannungsenergiemenge E1) und der Hilfsspannungsenergiemenge E3.

Ferner kann die Energieermittlungseinheit 51 auch jeweils im Zeitfenster T die Niederspannungsenergiemenge E1 der Niederspannungspulse P(U1) (oder äquivalent die Hochspannungsenergiemenge E2 der Hochspannungspulse P(U2)) aufsummieren und separat die Hilfsspannungsenergiemenge E3 der Hilfsspannungspulse P(U3) aufsummieren. Dies kann auch in separaten Energieermittlungseinheiten 51 erfolgen. Die Zündenergiemenge E entspricht weiters der Summe der Hilfsspannungsenergiemenge E3 und der Niederspannungsenergiemenge E1 (oder der äquivalenten Hochspannungsenergiemenge E2).

Die aufsummierte Energiemenge E wird an die Energievergleichseinheit 52 weitergegeben. Vorab wurde z.B. ein Energiegrenzwert G von beispielsweise 4 Joule für ein ebenso beispielhaft definiertes 1 Sekunden Zeitfenster T definiert. Ferner wird beispielhaft angenommen, dass die Pulskombination K einer Energiemenge von 1 Joule entspricht. Die Vergleichseinheit 52 stellt für das Zeitfenster T in Fig. 2c fest, dass die Zündenergiemenge E gleich dem Energiegrenzwert G ist ("4 mal 1 Joule"), womit keine Aktion A ausgelöst wird. Das bedeutet, dass im aktuellen Zeitfenster T keine weiteren Hochspannungspulse P(U2) und damit keine weiteren Niederspannungspulse P(U1) (und ggf. keine weiteren Hilfsspannungspulse P(U3)) erlaubt sind. Somit übermittelt die Vergleichseinheit 52 an die Blockiereinheit 53 den Auftrag diese zu verhindern. Die Blockiereinheit 53 löst eine entsprechende Aktion A aus. Dies kann beispielsweise in einer Energiebegrenzungseinheit 5 entsprechend Fig. 1b oder Fig. 1c erfolgen, indem direkt auf die Pulserzeugungseinheit 23 und/oder Hilfspulserzeugungseinheit 15 eingewirkt wird.

Es kann eine Mehrzahl an Zeitfenstern T vorgesehen sein, wobei während der einzelnen Zeitfenster T jeweils die aufsummierte Niederspannungsenergiemenge E1 der beinhalteten Niederspannungspulse P(U1) (oder der Pulspakete P1) mit einem Niederspannungsenergiegrenzwert G1 verglichen wird. Gegebenenfalls kann während der einzelnen Zeitfenster T zudem jeweils die Hilfsspannungsenergiemenge E3 der beinhalteten Hilfsspannungspulse P(U3) aufsummiert und mit einem Hilfsspannungsenergiegrenzwert G3 verglichen werden.

Bei Überschreitung des Energiegrenzwerts G innerhalb des zugehörigen Zeitfensters T, werden im betreffenden Zeitfenster T weitere Hochspannungspulse P(U2) und/oder Hilfsspannungspulse P(U3) verhindert. Die Zeitfenster T können (zumindest teilweise) überlappen und/oder aneinandergereiht sein. Ferner können unterschiedliche Zeitfenster T für unterschiedliche Verwendungszwecke etabliert sein wie beispielsweise um einen Energieeintrag in ein Werkstück zu dokumentieren und beispielsweise gleichzeitig sicherheitsrelevante Funktionen zu gewährleisten.

In Fig. 3 sind beispielhaft ein erstes Zeitfenster T1 und ein nur beispielhaft an das erste Zeitfenster T1 angrenzendes zweites Zeitfenster T2 als Zeitfenster T dargestellt. Im ersten Zeitfenster T1 treten vier Hilfsspannungspulse P(U3) und drei Hochspannungspulse P(U2) auf. Daraus kann geschlossen werden, dass im ersten Zeitfenster T1 auch drei Niederspannungspulse P(U1) auftreten. Im zweiten Zeitfenster T2, welches hier nur beispielhaft an das erste Zeitfenster T1 anschließt, treten ebenfalls vier Hilfsspannungspulse P(U3) und drei Hochspannungspulse P(U2) auf. Unter der Annahme, dass die Zeitfenster T1 und T2 jeweils eine Sekunde dauern und eine Pulskombination K eines Hochspannungspulses P(U2) mit einem Hilfsspannungspuls P(U3) jeweils mit 1 Joule angenommen wurde, würde sowohl die Zündenergiemenge E im ersten Zeitfenster T1, als auch die Zündenergiemenge E im zweiten Zeitfenster T2 unter einem Energiegrenzwert G von 4 Joule liegen. Somit würde in keinem der beiden Zeitfenster T1 und T2 eine Aktion A ausgelöst werden.

Ganz besonders vorteilhaft ist es jedoch, wenn ein Zeitfenster T vorgesehen ist, welches immer zum aktuellen Zeitpunkt endet und somit mit der aktuellen Zeit mitläuft. Das bedeutet, dass sich das Zeitfenster T auf der Zeitachse t nach rechts verschiebt, womit zum aktuellen Zeitpunkt immer jeweils um das Zeitfenster T in Echtzeit in die Vergangenheit geblickt wird.

Der aktuelle Zeitpunkt entspricht somit immer dem Endzeitpunkt Te. Dies kann erreicht werden, indem zumindest über einen Zeitraum entsprechend des Zeitfensters T der zeitliche Verlauf der Hochspannungspulse P(U2) und der gegebenenfalls auftretenden Hilfsspannungspulse P(U3) aufgezeichnet wird.

Wird dabei festgestellt, dass im zum aktuellen Zeitpunkt endenden Zeitfenster T bereits der Energiegrenzwert G erreicht wurde, so wird die Generierung weiterer Niederspannungspulse P(U1) (und damit weiterer Hochspannungspulse P(U2)) und - sofern Hilfsspannungspulse P(U3) vorgesehen sind - die Generierung weiterer Hilfsspannungspulse P(U3) verhindert, bis durch das Verschieben des Zeitfensters T entsprechend Niederspannungspulse P(U1) (und damit Hochspannungspulse P(U2)) und gegebenenfalls Hilfsspannungspulse P(U3) aus dem Zeitfenster T rutschen, womit die Zündenergiemenge E im Zeitfenster T nicht mehr den Energiegrenzwert G erreicht.

In den Fig. 4a bis 4c wird jeweils ein Zeitfenster T nach rechts verschoben Der aktuelle Zeitpunkt entspricht dem Endzeitpunkt Te und es wird das Zeitfenster T zurück bis zum Anfangszeitpunkt Ta betrachtet. Es wird abermals davon ausgegangen, dass eine Pulskombination K, welche aus einem Hochspannungspuls P(U2) mit einem synchronisierten Hilfsspannungspuls P(U3) besteht, eine Energiemenge von einem Joule beinhaltet und der Energiegrenzwert G vier Joule entspricht.

In Fig. 4a treten im Zeitfenster T vier Pulskombinationen K auf, womit der Energiegrenzwert G nicht überschritten, aber erreicht wurde. Da der Energiegrenzwert G erreicht wurde, wurde die Anforderung für eine neue Pulskombination K, zum Zeitpunkt Te durch die Aktion A blockiert und damit keine weitere Pulskombination K erzeugt, solange sich diese vier Pulskombinationen K im Zeitfenster T befinden. Das Zeitfenster T wird dabei kontinuierlich nach rechts verschoben.

Fig. 4b zeigt in Bezug zu Fig. 4a einen späteren Zeitpunkt, zu welchem die erste Pulskombination K bereits aus dem Zeitfenster T gerutscht ist, und dadurch eine weitere Pulskombination K im Zeitfenster T erzeugt wurde. Ferner ist die nicht erzeugte Pulskombination K in Fig. 4b ebenfalls strichliert dargestellt, wobei ein Kreuz nochmals verdeutlicht, dass diese Pulskombination K in die Berechnung der Zündenergiemenge E nicht einfließt, da diese weitere Pulskombination K wie in Fig. 4a beschrieben, nicht erzeugt wurde. Damit entspricht in Fig. 4b die Zündenergiemenge E wiederum dem Energiegrenzwert G. Das bedeutet, dass im Zeitfenster T keine weitere Pulskombination K zugelassen wird, bis nicht mindestens eine weitere Pulskombination K aus dem Zeitfenster T gerutscht ist. Somit wird durch eine Aktion A verhindert, dass im verschiebbaren Zeitfenster T eine weitere Pulskombination K auftritt. Man beachte, dass die bereits zuvor blockierte Pulskombination K auch in Folge bei der Ermittlung der Zündenergiemenge E nicht mitgezählt wird, da diese Pulskombination K lediglich geplant war, jedoch aktiv durch eine Aktion A verhindert wurde, und somit die Energie nicht zur Elektrode 17 abgegeben worden ist.

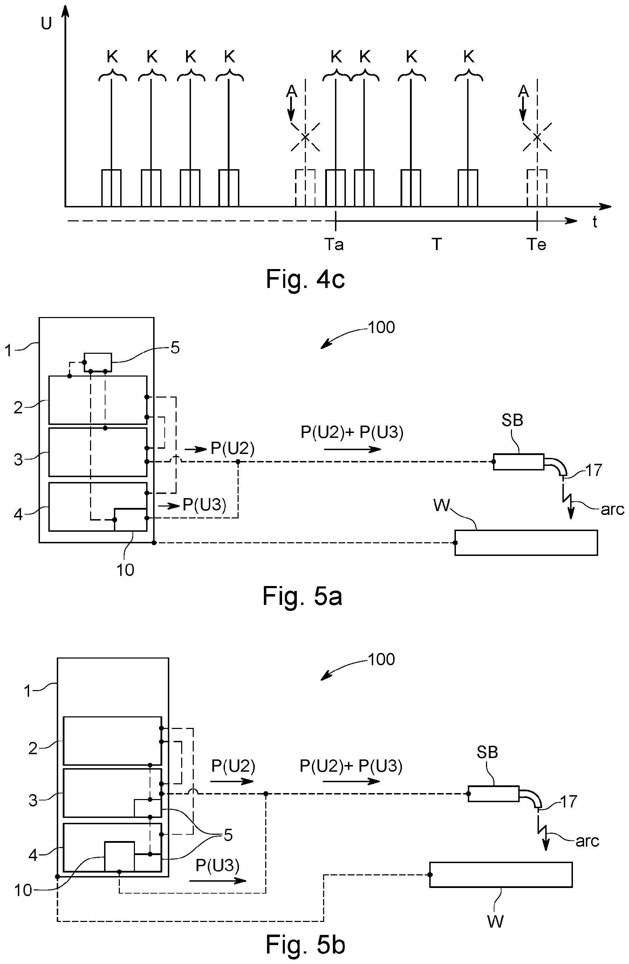

In Fig. 4c ist das Zeitfenster T weiter nach rechts gerutscht, wobei zum aktuellen Endzeitpunkt Te noch eine weitere Pulskombination K vorgesehen gewesen wäre. Die strichliert dargestellte Pulskombination K wird abermals durch Auslösen der Aktion A blockiert (was wiederum durch ein Kreuz dargestellt ist), um sicherzustellen, dass die Zündenergiemenge E den Energiegrenzwert G nicht überschreitet.

Fig. 5a zeigt eine erste schematische Ausführungsform der Erfindung. In einer Stromquelle 1 befindet sich unter anderem ein Prozessregler 2, eine interne Hochfrequenz-(HF)-Zündeinheit 3, ein interner Wechselrichter 4 mit Hilfsspannungsquelle 10 und eine Energiebegrenzungseinheit 5. Der Prozessregler 2 ist mit der Energiebegrenzungseinheit 5, der Hochfrequenz-(HF)-Zündeinheit 3 und dem Wechselrichter 4 und folglich der Hilfsspannungsquelle 10 verbunden. Die Energiebegrenzungseinheit 5 ist zusätzlich mit der Hochfrequenz-(HF)-Zündeinheit 3 und dem Wechselrichter 4 und folglich der Hilfsspannungsquelle 10 verbunden. Die interne Hochfrequenz-HF-Zündeinheit 3 erzeugt Niederspannungspulse P(U1), welche in Hochspannungspulse P(U2) transformiert werden. Hierzu kann die Hochfrequenz-HF-Zündeinheit 3 unter anderem eine Niederspannungsquelle Q1, eine Pulserzeugungseinheit 23 und eine Transformiereinheit 20, wie sie oben beschrieben werden, umfassen. Der Wechselrichter 4 mit integrierter Hilfsspannungsquelle 10 liefert Hilfsspannungspulse P(U3). Der Prozessregler 2 fordert zur Zündung eines Lichtbogens arc bei der Hochfrequenz-(HF)-Zündeinheit 3 Niederspannungspulse P(U1) und beim internen Wechselrichter 4 mit Hilfsspannungsquelle 10 Hilfsspannungspulse P(U3) an. Die Hochspannungspulse P(U2) und die Hilfsspannungspulse P(U3) werden zusammengeführt und über ein Schweißkabel und über den Schweißbrenner SB zur Elektrode 17 geführt. Zwischen der Spitze der Elektrode 17 und dem Werkstück W wird ein Lichtbogen arc gezündet. In dieser Ausführungsform ist eine einzelne Energiebegrenzungseinheit 5, umfassend eine Energieermittlungseinheit 51, eine Energievergleichseinheit 52 und eine Blockiereinheit 53, vorgesehen, wobei die Energieermittlungseinheit 51 im Zeitfenster T die Zündenergiemenge E, bestehend aus Niederspannungsenergiemenge E1 der Niederspannungspulse P(U1) und die Hilfsspannungsenergiemenge E3 der Hilfsspannungspulse P(U3) aufsummiert. Im Falle einer gewünschten Energiebegrenzung (d.h. Verhinderung weiterer Zündenergie E im Zeitfenster T), welche durch eine Überschreitung des Energiegrenzwertes G durch die Zündenergiemenge E erfolgen soll, werden durch ein Auslösen einer Aktion A Niederspannungspulse P(U1) und folglich Hochspannungspulse P(U2) und/oder Hilfsspannungspulse P(U3) blockiert. Ferner ist es auch möglich, dass sich die Hochfrequenz-(HF)-Zündeinheit 3 und der Wechselrichter 4 außerhalb der Stromquelle 1 befinden.

Fig. 5b zeigt eine zweite schematische Ausführungsform der Erfindung. In einer Stromquelle 1 befindet sich unter anderem ein Prozessregler 2, eine interne Hochfrequenz-(HF)-Zündeinheit 3, ein interner Wechselrichter 4 mit einer Hilfsspannungsquelle 10 und zwei miteinander kommunizierende separate Energiebegrenzungseinheiten 5. Der Prozessregler 2 ist mit beiden Energiebegrenzungseinheiten 5, der Hochfrequenz-(HF)-Zündeinheit 3 und dem Wechselrichter 4 und folglich der Hilfsspannungsquelle 10 verbunden. Die beiden Energiebegrenzungseinheiten 5 sind gekoppelt und sind zusätzlich mit der Hochfrequenz-(HF)-Zündeinheit 3 und dem Wechselrichter 4 und folglich der Hilfsspannungsquelle 10 verbunden. Die interne Hochfrequenz-(HF)-Zündeinheit 3 erzeugt Niederspannungspulse P(U1), welche in Hochspannungspulse P(U2) transformiert werden und kann hierzu unter anderem eine Niederspannungsquelle Q1, eine Pulserzeugungseinheit 23 und eine Transformiereinheit 20, wie sie oben beschrieben werden, umfassen. Der Wechselrichter 4 mit integrierter Hilfsspannungsquelle 10 liefert Hilfsspannungspulse P(U3). Der Prozessregler 2 fordert die Niederspannungspulse P(U1) und/oder die Hilfsspannungspulse P(U3) für eine Zündung eines Lichtbogens arc direkt bei der Hochfrequenz-(HF)-Zündeinheit 3 und dem internen Wechselrichter 4 mit Hilfsspannungsquelle 10 an. Die Hochspannungspulse P(U2) und die Hilfsspannungspulse P(U3) werden zusammengeführt und über ein Schweißkabel und über den Schweißbrenner SB zur Elektrode 17 geführt. Zwischen der Spitze der Elektrode 17 und dem Werkstück W wird ein Lichtbogen arc gezündet. In dieser Ausführungsform sind zwei miteinander kommunizierende Energiebegrenzungseinheiten 5 vorgesehen, welche die Zündenergiemenge E aufsummieren. Die erste Energiebegrenzungseinheit 5 summiert die Niederspannungsenergiemenge E1 der Niederspannungspulse P(U1) auf und die zweite Energiebegrenzungseinheit 5 summiert die Hilfsspannungsenergiemenge E3 der Hilfsspannungspulse P(U3) auf. Zusätzlich kennt jede oder zumindest eine der beiden Energiebegrenzungseinheiten 5 die gesamte Zündenergiemenge E, welche die Summe aus Niederspannungsenergiemenge E1 und Hilfsspannungsenergiemenge E3 darstellt. Im Falle einer Energiebegrenzung durch Überschreitung des Energiegrenzwertes G im Zeitfenster T, werden Niederspannungspulse P(U1) und folglich Hochspannungspulse P(U2) und/oder Hilfsspannungspulse P(U3) durch zumindest eine Energiebegrenzungseinheit 5 blockiert. Somit sind in dieser Ausführungsform zwei miteinander kommunizierende Energiebegrenzungseinheiten 5 dargestellt, welche gemeinsam dafür sorgen, dass der Energiegrenzwert G nicht überschritten wird. Es können in einer anderen Ausführungsform auch zwei separate Energieermittlungseinheiten 51 vorgesehen sein, welche gemeinsam die Zündenergiemenge E ermitteln und miteinander kommunizieren, wobei in dieser weiteren Ausführungsform die Zündenergiemenge E in einer zentralen Energiebegrenzungseinheit 5 mit einem Energiegrenzwert G verglichen wird. Ferner ist es auch möglich, dass sich die Hochfrequenz-(HF)-Zündeinheit 3 und/oder der Wechselrichter 4 mit Hilfsspannungsquelle 10 mit den jeweiligen Energiebegrenzungseinheiten 5 bzw. mit den Energieermittlungseinheiten 51 außerhalb der Stromquelle 1 befinden können.

Zudem ist es in Fig. 5b auch möglich, dass die erste Energiebegrenzungseinheit 5, beispielsweise die Niederspannungsenergiemenge E1 auf einen ersten definierten Grenzwert begrenzt und die zweite Energiebegrenzungseinheit 5, beispielsweise die Hilfsspannungsenergiemenge E3 auf einen zweiten definierten Grenzwert begrenzt. Beide Grenzwerte können hierbei auch unterschiedlich sein. Die beiden internen Energiebegrenzungseinheiten 5 begrenzen gemeinsam die Zündenergiemenge E auf einen dritten definierten Grenzwert. Die Summe beider Grenzwerte bleibt dabei stets unter dem zuvor definierten Energiegrenzwert G.

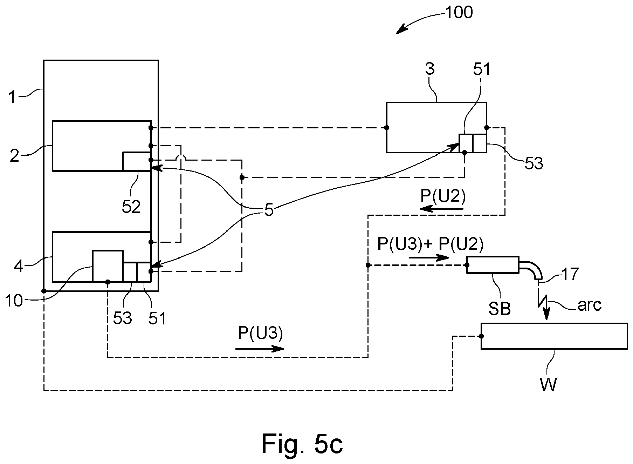

Fig. 5c zeigt eine dritte schematische Ausführungsform der Erfindung. In einer Stromquelle 1 befindet sich unter anderem ein Prozessregler 2 und eine Energievergleichseinheit 52 und ein interner Wechselrichter 4 mit einer Hilfsspannungsquelle 10 und einer Energieermittlungseinheit 51 und einer Blockiereinheit 53. Außerhalb der Stromquelle 1 ist eine externe Hochfrequenz-(HF)-Zündeinheit 3 mit einer eigenen Energieermittlungseinheit 51 und einer eigenen Blockiereinheit 53 angeordnet. Die Energiebegrenzungseinheit 5 ist hier verteilt realisiert und umfasst somit eine Energievergleichseinheit 52, zwei Energieermittlungseinheiten 51 und zwei Blockiereinheiten 53, was in Fig. 5c durch die Pfeile angedeutet ist. Die Energiebegrenzungseinheit 5 wird durch eine Verbindung der beiden Energieermittlungseinheiten 51 mit der Energievergleichseinheit 52 realisiert. Der Prozessregler 2 ist mit der Energievergleichseinheit 52 und somit mit der aus internen und externen Komponenten aufgebauten Energiebegrenzungseinheit 5, der externen Hochfrequenz-(HF)-Zündeinheit 3 und dem Wechselrichter 4 und folglich der Hilfsspannungsquelle 10 verbunden. Die externe Hochfrequenz-(HF)-Zündeinheit 3 erzeugt Niederspannungspulse P(U1), welche in Hochspannungspulse P(U2) transformiert werden und kann hierzu unter anderem eine Niederspannungsquelle Q1, eine Pulserzeugungseinheit 23 und eine Transformiereinheit 20, wie sie oben beschrieben werden, umfassen. Der interne Wechselrichter 4 mit integrierter Hilfsspannungsquelle 10 liefert Hilfsspannungspulse P(U3). Der Prozessregler 2 fordert die Niederspannungspulse P(U1) und/oder die Hilfsspannungspulse P(U3) für eine Zündung eines Lichtbogens arc direkt bei der externen Hochfrequenz-(HF)-Zündeinheit 3 und dem internen Wechselrichter 4 mit Hilfsspannungsquelle 10 an. Die Hochspannungspulse P(U2) und die Hilfsspannungspulse P(U3) werden zusammengeführt und über ein Schweißkabel und über den Schweißbrenner SB zur Elektrode 17 geführt. Zwischen der Spitze der Elektrode 17 und dem Werkstück W wird ein Lichtbogen arc gezündet. In dieser Ausführungsform sind zwei separate, in einer Energiebegrenzungseinheit 5 kommunizierende Energieermittlungseinheiten 51 vorgesehen, welche die Zündenergiemenge E aufsummieren. Die erste Energieermittlungseinheit 51 summiert die Niederspannungsenergiemenge E1 der Niederspannungspulse P(U1) auf und die zweite Energieermittlungseinheit 51 summiert die Hilfsspannungsenergiemenge E3 der Hilfsspannungspulse P(U3) auf. Die Energiebegrenzungseinheit 5 kennt die gesamte Zündenergie E, welche die Summe aus Niederspannungsenergiemenge E1 und Hilfsspannungsenergiemenge E3 darstellt. Im Falle einer Energiebegrenzung durch Überschreitung des Energiegrenzwertes G im Zeitfenster T, werden im Zeitfenster T weitere Niederspannungspulse P(U1) und folglich Hochspannungspulse P(U2) und/oder Hilfsspannungspulse P(U3) durch eine Aktion A von den Blockiereinheiten 53 blockiert.

Die hier gezeigten Ausführungsformen stellen nur Beispiele dar. Neben den hier gezeigten Beispielen sind alle Kombinationen aus Wechselrichter 4, Hilfsspannungsquellen 10, interner oder externer Anordnungen, Anzahl der Energiebegrenzungseinheiten 5 und die Kommunikation der Energiebegrenzungseinheiten 5 miteinander, mit unterschiedlichsten Kombinationen aus Grenzwerten, möglich.

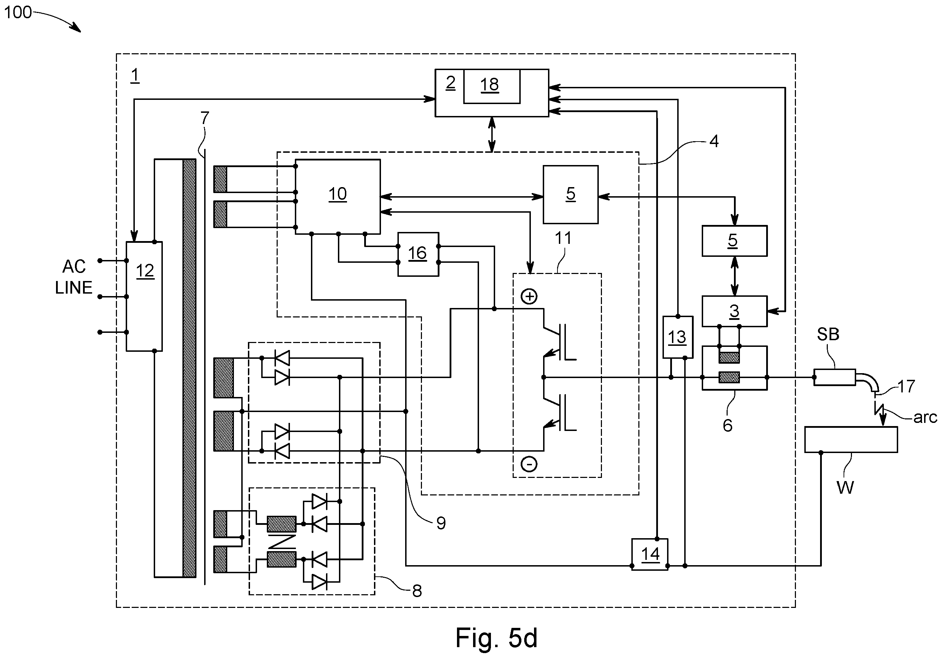

Fig. 5d zeigt eine schalttechnische Ausführungsform eines Schweißgeräts 100 mit zwei miteinander kommunizierenden, erfindungsgemäßen Energiebegrenzungseinheiten 5. Das Schweißgerät 100 umfasst eine Stromquelle 1, einen Schweißbrenner SB und eine Elektrode 17. Die Elektrode 17 befindet sich an einem Ende des Schweißbrenners SB, das zweite Ende des Schweißbrenners SB ist mit der Stromquelle 1 verbunden, und zwischen der Elektrode 17 und dem Werkstück W wird ein Lichtbogen arc gezündet, wobei das Werkstück W durch eine Masseleitung ebenfalls mit der Stromquelle 1 verbunden ist. Die Stromquelle 1 ist eingangsseitig mit einem elektrischen Versorgungsnetz AC LINE verbunden. Die Stromquelle 1 umfasst eine Prozesskontrolleinheit oder einen Prozessregler 2 mit beispielsweise integriertem User-Interface 18, eine Hochfrequenz-(HF)-Zündeinheit 3, einen Wechselrichter 4, zwei Energiebegrenzungseinheiten 5, eine Hochspannungstransformiereinheit 6, einen Schweißtransformator 7, eine Leerlaufspannungserhöhung 8, einen Sekundärgleichrichter 9, eine Hilfsspannungsquelle 10, eine Umpoleinheit 11, ein Primärleistungsteil 12, eine Prozessspannungsmessung 13, eine Prozessstrommessung 14 und eine Detektionseinheit 16. Eine beispielhafte Hochfrequenz-(HF)-Zündeinheit 3 mit einer zugehörigen Energiebegrenzungseinheit 5 sind detailliert in Fig. 1b und eine beispielhafte Hilfsspannungsquelle 10 mit einer zugehörigen Energiebegrenzungseinheit 5 sind detailliert in Fig. 1c dargestellt. Ausgehend von einer niederfrequenten 50/60 Hz AC-Netzspannung des elektrischen Versorgungsnetzes AC LINE (einphasig oder mehrphasig; 100 V bis 600 V) wird mit Hilfe des Primärleistungsteils 12 diese Spannung in eine hochfrequente AC-Spannung (beispielsweise 1 kHz bis mehrere 100 kHz) umgewandelt. Das Primärleistungsteil 12 ist mit dem Prozessregler 2 verbunden und dieser steuert oder regelt den Energiefluss. Die umgewandelte hochfrequente AC-Spannung wird dem Schweißtransformator 7 auf der Primärwicklungsseite zugeführt und dieser transformiert diese auf die Sekundärwicklungsseite mit den für den Schweißprozess typischen niedrigen Spannungen und hohen Stromstärken. An der Sekundärwicklungsseite des Schweißtransformators 7 befindet sich der Sekundärgleichrichter 9 der beispielsweise als Vollweggleichrichter mit Mittelpunktanzapfung ausgeführt ist und somit positive und negative Ausgangsspannungen liefern kann. Der Sekundärgleichrichter 9 ist mit der Umpoleinheit 11 des Wechselrichters 4 verbunden und liefert den überwiegenden Stromanteil in einem Schweißprozess. An der Sekundärwicklungsseite des Schweißtransformators 7 befindet sich die Leerlaufspannungserhöhung 8. Die Leerlaufspannungserhöhung 8 ist mit dem Sekundärgleichrichter 9 parallel verbunden und sorgt für eine Spannungserhöhung der Leerlaufspannung von beispielsweise 60 V auf bis zu 113 V. Ebenfalls kann die Leerlaufspannungserhöhung 8 sowohl positive als auch negative Spannungen liefern. Die Leerlaufspannungserhöhung 8 kann beim Zünden des Lichtbogens arc unterstützend beitragen, liefert aber durch die gekoppelte Drossel nur einen begrenzten Strom. Weiters kann ein Abriss des Lichtbogens arc bis zu einem gewissen Grad durch die Leerlaufspannungserhöhung 8 verhindert werden. Sollte die Leerlaufspannungserhöhung 8 nicht ausreichend sein, so wird die Hilfsspannungsquelle 10 zugeschaltet, um einen Lichtbogenabriss zu verhindern. An der Sekundärwicklungsseite des Schweißtransformators 7 befindet sich zusätzlich noch die Hilfsspannungsquelle 10, welche sich wiederum im Wechselrichter 4 befindet. Ferner ist die Hilfsspannungsquelle 10, und somit auch die Energiebergrenzungseinheit 5, über die Detektionseinheit 16 mit der Umpoleinheit 11 verbunden. Die Umpoleinheit kann beispielsweise Halbleitertransistoren wie IGBTs, Mosfets, Bipolartransistoren,... umfassen. Die Umpoleinheit 11 schaltet die von der Leerlaufspannungserhöhung 8 und/oder die vom Sekundärgleichrichter 9 und/oder die von der Hilfsspannungsquelle 10 kommende Spannung in der vom Prozessregler 2 vorgegebenen Polarität auf die Elektrode 17. Die Detektionseinheit 16 misst und erkennt einen Stromfluss und detektiert somit einen Schweißbetrieb/Leerlaufbetrieb/Zündbetrieb. Im Wechselrichter 4 befindet sich eine Energiebegrenzungseinheit 5, welche wiederum mit der Hilfsspannungsquelle 10 verbunden ist. Diese Energiebegrenzungseinheit 5 gleicht im Wesentlichen der in Fig. 1c dargestellten Ausführungsform. Zur Regelung des Schweißprozesses werden vom Prozessregler 2 eine Prozessspannungsmessung 13 und eine Prozessstrommessung 14 verwendet. Der Prozessregler 2 fordert die Hochspannungspulse P(U2) bei der Hochfrequenz-(HF)-Zündeinheit 3 und die Hilfsspannungspulse P(U3) beim Wechselrichter 4 zur Lichtbogenzündung oder Lichtbogenstabilisierung an. In diesem Ausführungsbeispiel werden die Hochspannungspulse P(U2) der Hochspannungs-(HF)-Zündeinheit 3 mittels Hochspannungstransformiereinheit 6 in den Schweißkreis eingekoppelt. Die Energiebegrenzungseinheit 5 für die Hochspannungs-(HF)-Zündeinheit 3 kommuniziert mit der Energiebegrenzungseinheit 5 für den Wechselrichter 4 und sorgt für einen sicherheitsunkritischen Zündbetrieb. Das User-Interface 18 dient als Schnittstelle für den Bediener zum Prozessregler 2.

## Patentansprüche

1. Verfahren zum sicheren Betrieb eines Schweißgeräts (100), wobei auf einer Niederspannungsseite (21) des Schweißgeräts (100) auftretende Niederspannungspulse (P(U1)) in auf einer Hochspannungsseite (22) des Schweißgeräts (100)) auftretende Hochspannungspulse (P(U2)) transformiert werden, wobei während eines Zündbetriebs und/oder Leerlaufbetriebs unter Verwendung der Hochspannungspulse (P(U2)) zwischen einer Elektrode (17) und einem Werkstück (W) ein Lichtbogen (arc) gezündet wird, **dadurch gekennzeichnet, dass** im Zündbetrieb und/oder im Leerlaufbetrieb und/oder in einem Schweißbetrieb ein von einem Anfangszeitpunkt (Ta) bis zu einem Endzeitpunkt (Te) reichendes Zeitfenster (T) vorgesehen ist, wobei während des Zeitfensters (T) eine an der Elektrode (17) auftretende Zündenergiemenge (E) ermittelt und mit einem Energiegrenzwert (G) verglichen wird, **und dass** bei einem Überschreiten des Energiegrenzwerts (G) eine Aktion (A) ausgelöst wird, um im Zeitfenster (T) weitere Hochspannungspulse (P(U2)) zu verhindern.

2. Verfahren nach Anspruch 1, **dadurch gekennzeichnet, dass** während des Zeitfensters (T) eine Hochspannungsenergiemenge (E2) der Hochspannungspulse (P(U2)) aufsummiert wird, **und dass** die Hochspannungsenergiemenge (E2) verwendet wird, um die an der Elektrode auftretende Zündenergiemenge (E) zu ermitteln.

3. Verfahren nach Anspruch 2, **dadurch gekennzeichnet, dass** die Energiemenge eines Hochspannungspulses (P(U2)) vorgegeben wird, **und dass** die während des Zeitfensters (T) auftretenden Hochspannungspulse (P(U2)) gezählt und mit der Energiemenge eines Hochspannungspulses (P(U2)) multipliziert werden, um die während des Zeitfensters (T) aufsummierte Hochspannungsenergiemenge (E2) zu ermitteln.

4. Verfahren nach Anspruch 1, **dadurch gekennzeichnet, dass** während des Zeitfensters (T) eine Niederspannungsenergiemenge (E1) der Niederspannungspulse (P(U1)) aufsummiert **und dass** die Niederspannungsenergiemenge (E1) verwendet wird, um die an der Elektrode auftretende Zündenergiemenge (E) zu ermitteln.

5. Verfahren nach Anspruch 4, **dadurch gekennzeichnet, dass** die Energiemenge eines Niederspannungspulses (P(U1)) vorgegeben wird, **und dass** die während des Zeitfensters (T) auftretenden Niederspannungspulse (P(U1) gezählt und mit der Energiemenge eines Niederspannungspulses (P(U1)) multipliziert werden, um die während des Zeitfensters (T) aufsummierte Niederspannungsenergiemenge (E1) zu ermitteln.

6. Verfahren nach Anspruch 4, **dadurch gekennzeichnet, dass** die Energiemenge eines Niederspannungspulses (P(U1)) pro Zeiteinheit vorgegeben wird, **und dass** die Summe der Pulsdauern der während des Zeitfensters (T) auftretenden Niederspannungspulse (P(U1) ermittelt und mit der Energiemenge eines Niederspannungspulses (P(U1)) pro Zeiteinheit multipliziert wird, um die während des Zeitfensters (T) aufsummierte Niederspannungsenergiemenge (E1) zu ermitteln.

7. Verfahren nach einem der Ansprüche 1 bis 6, **dadurch gekennzeichnet, dass** Hilfsspannungspulse (P(U3)) auf die Hochspannungsseite (22) eingebracht werden, um das Zünden eines Lichtbogens (arc) zu unterstützen, **und dass** während des Zeitfensters (T) eine Hilfsspannungsenergiemenge (E3) der Hilfsspannungspulse (P(U3)) aufsummiert wird, um eine Hilfsspannungsenergiemenge (E3) zu ermitteln, **dass** die Hilfsspannungsenergiemenge (E3) verwendet wird, um die an der Elektrode (17) auftretende Zündenergiemenge (E) zu ermitteln **und dass** durch das Auslösen der Aktion (A) im Zeitfenster (T) weitere Hilfsspannungspulse (P(U3)) verhindert werden.

8. Verfahren nach Anspruch 7, **dadurch gekennzeichnet, dass** die Hilfsspannungspulse (P(U3)) mit den Hochspannungspulsen (P(U2)) oder die Hochspannungspulse (P(U2)) mit den Hilfsspannungspulsen (P(U3)) zeitlich synchronisiert, vorzugsweise überlagert, werden.

9. Verfahren nach Anspruch 7 oder 8, **dadurch gekennzeichnet, dass** die Energiemenge eines Hilfsspannungspulses (P(U3)) vorgegeben wird, **dass** die während des Zeitfensters (T) auftretenden Hilfsspannungspulse (P(U3)) gezählt und mit der Energiemenge eines Hilfsspannungspulses (P(U3)) multipliziert werden, um die während des Zeitfensters (T) aufsummierte Hilfsspannungsenergiemenge (E3) zu ermitteln.

10. Verfahren nach Anspruch 7 oder 8, **dadurch gekennzeichnet, dass** die Energiemenge eines Hilfsspannungspulses (P(U3)) pro Zeiteinheit vorgegeben wird, **dass** die Summe der Pulsdauern der während des Zeitfensters (T) auftretenden Hilfsspannungspulse (P(U3)) ermittelt und mit der Energiemenge eines Hilfsspannungspulses (P(U3)) pro Zeiteinheit multipliziert wird, um die während des Zeitfensters (T) aufsummierte Hilfsspannungsenergiemenge (E3) zu ermitteln.

11. Verfahren nach einem der Ansprüche 7 bis 10, **dadurch gekennzeichnet, dass** im Zeitfenster (T) aus einer Differenz des Energiegrenzwerts (G) und der Zündenergiemenge (E) eine Restenergiemenge ermittelt wird und anhand der Restenergiemenge ermittelt wird, ob durch eine ausgelöste Aktion (A) im Zeitfenster (T) weitere Hilfsspannungspulse (P(U3)) und/oder Hochspannungspulse (P(U2) verhindert werden.

12. Verfahren nach einem der Ansprüche 1 bis 11, **dadurch gekennzeichnet, dass** das Zeitfenster (T) kontinuierlich in Echtzeit verschoben wird, sodass der Endzeitpunkt (Te) dem aktuellen Zeitpunkt entspricht.

13. Verfahren nach einem der Ansprüche 1 bis 12, **dadurch gekennzeichnet, dass** als Aktion (A) die Generierung weiterer Niederspannungspulse (P(U1)) und folglich Hochspannungspulse (P(U2)) und/oder Hilfsspannungspulse (P(U3)) blockiert wird.

14. Verfahren nach einem der Ansprüche 1 bis 13, **dadurch gekennzeichnet, dass** das Auslösen der Aktion (A) deaktiviert wird, wenn sich das Schweißgerät (100) in einem Schweißbetrieb befindet.

15. Energiebegrenzungseinheit (5) für ein Schweißgerät (100) mit einer Niederspannungsseite (21) und einer Hochspannungsseite (22), **dadurch gekennzeichnet, dass** die Energiebegrenzungseinheit (5) mindestens eine Energieermittlungseinheit (51) umfasst, welche ausgestaltet ist, in einem Zündbetrieb und/oder einem Leerlaufbetrieb und/oder einem Schweißbetrieb des Schweißgeräts (100) während eines Zeitfensters (T), welches von einem Anfangszeitpunkt (Ta) bis zu einem Endzeitpunkt (Te) reicht, eine an einer Elektrode (17) auftretende Zündenergiemenge (E) zu ermitteln, **dass** die Energiebegrenzungseinheit (5) mindestens eine Energievergleichseinheit (52) umfasst, welche ausgestaltet ist die Zündenergiemenge (E) mit einem vorgegebenen Energiegrenzwert (G) zu vergleichen, **und dass** die Energiebegrenzungseinheit (5) mindestens eine Blockiereinheit (53) umfasst, welche ausgestaltet ist, bei einem Überschreiten des Energiegrenzwerts (G) eine Aktion (A) auszulösen, um im Zeitfenster (T) ein Auftreten weiterer Zündenergie an der Elektrode (17) zu verhindern.

16. Energiebegrenzungseinheit (5) nach Anspruch 15, **dadurch gekennzeichnet, dass** eine Detektionseinheit (16) vorgesehen ist, welche ausgestaltet ist, den Schweißbetrieb des Schweißgeräts (100) vom Zündbetrieb und/oder Leerlaufbetrieb des Schweißgeräts (100) zu unterscheiden und mindestens eine Energieermittlungseinheit (51) und/oder mindestens eine Energievergleichseinheit (52) und/oder mindestens eine Blockiereinheit (53) im Schweißbetrieb zu deaktivieren und im Zündbetrieb und/oder Leerlaufbetrieb zu aktivieren.

17. Schweißgerät (100) umfassend eine Niederspannungsquelle (Q1), welche ausgestaltet ist, auf der Niederspannungsseite (21) Niederspannungspulse (P(U1)) zu generieren und umfassend eine Transformiereinheit (20) zum Wandeln von Niederspannungspulsen (P(U1)) auf an einer Hochspannungsseite (22) anliegenden Hochspannungspulsen (P(U2) zum Zünden eines Lichtbogens (arc) zwischen einer Elektrode (17) und einem Werkstück (W) und umfassend mindestens einer Energiebegrenzungseinheit (5) nach einem der Ansprüche 15 oder 16, wobei die Blockiereinheit (53) ausgestaltet ist, durch die Aktion (A) im Zeitfenster (T) ein Auftreten weiterer Zündenergie an der Elektrode (17) zu verhindern, indem weitere Niederspannungspulse (P(U1)) auf der Niederspannungsseite (21) und/oder Hochspannungspulse (P(U2)) auf der Hochspannungsseite (22) und/oder Hilfsspannungspulse (P(U3)) auf der Hochspannungsseite (22) verhindert werden.

## Claims

1. Method for safe operation of a welding apparatus (100), low-voltage pulses (P(U1)) occurring on a low-voltage side (21) of the welding apparatus (100) being transformed into high-voltage pulses (P(U2)) occurring on a high-voltage side (22) of the welding apparatus (100), an arc being ignited between an electrode (17) and a workpiece (W) during an ignition mode and/or idling mode using the high-voltage pulses (P(U2)), **characterized in that,** in the ignition mode and/or in the idling mode and/or in a welding mode, a time window (T) that extends from a starting time point (Ta) to an end time point (Te) is provided, an amount of ignition energy (E) occurring at the electrode (17) being determined during the time window (T) and compared with an energy limit value (G), **and in that** an action (A) is triggered in the event of the energy limit value (G) being exceeded, in order to prevent further high-voltage pulses (P(U2)) in the time window (T).

2. Method according to claim 1, **characterized in that** an amount of high-voltage energy (E2) of the high-voltage pulses (P(U2)) is summed during the time window (T), **and in that** the amount of high-voltage energy (E2) is used to determine the amount of ignition energy (E) occurring at the electrode.

3. Method according to claim 2, **characterized in that** the amount of energy of one high-voltage pulse (P(U2)) is predefined, **and in that** the high-voltage pulses (P(U2)) occurring during the time window (T) are counted and multiplied by the amount of energy of one high-voltage pulse (P(U2)) in order to determine the amount of high-voltage energy (E2) summed during the time window (T).

4. Method according to claim 1, **characterized in that,** during the time window (T), an amount of low-voltage energy (E1) of the low-voltage pulses (P(U1)) is summed, **and in that** the amount of low-voltage energy (E1) is used to determine the amount of ignition energy (E) occurring at the electrode.

5. Method according to claim 4, **characterized in that** the amount of energy of one low-voltage pulse (P(U1)) is predefined, **and in that** the low-voltage pulses (P(U1)) occurring during the time window (T) are counted and multiplied by the amount of energy of one low-voltage pulse (P(U1)) in order to determine the amount of low-voltage energy (E1) summed during the time window (T).

6. Method according to claim 4, **characterized in that** the amount of energy of one low-voltage pulse (P(U1)) per time unit is predefined, **and in that** the sum of the pulse durations of the low-voltage pulses (P(U1)) occurring during the time window (T) is determined and multiplied by the amount of energy of one low-voltage pulse (P(U1)) per time unit, in order to determine the amount of low-voltage energy (E1) summed during the time window (T).

7. Method according to any of claims 1 to 6, **characterized in that** auxiliary voltage pulses (P(U3)) are applied on the high-voltage side (22) in order to support the ignition of an arc, **and in that,** during the time window (T), an amount of auxiliary voltage energy (E3) of the auxiliary voltage pulses (P(U3)) is summed, in order to determine an amount of auxiliary voltage energy (E3), **in that** the amount of auxiliary voltage energy (E3) is used to determine the amount of ignition energy (E) occurring at the electrode (17), **and in that** further auxiliary voltage pulses (P(U3)) are prevented by triggering the action (A) in the time window (T).

8. Method according to claim 7, **characterized in that** the auxiliary voltage pulses (P(U3)) are temporally synchronized, preferably superimposed, with the high-voltage pulses (P(U2), or the high-voltage pulses (P(U2) are temporally synchronized, preferably superimposed, with the auxiliary voltage pulses (P(U3).

9. Method according to either claim 7 or claim 8, **characterized in that** the amount of energy of an auxiliary voltage pulse (P(U3)) is predefined, **in that** the auxiliary voltage pulses (P(U3)) occurring during the time window (T) are counted and multiplied by the amount of energy of an auxiliary voltage pulse (P(U3)), in order to determine the amount of auxiliary voltage energy (E3) summed during the time window (T).

10. Method according to either claim 7 or claim 8, **characterized in that** the amount of energy of an auxiliary voltage pulse (P(U3)) per time unit is predefined, **in that** the sum of the pulse durations of the auxiliary voltage pulses (P(U3)) occurring during the time window (T) is determined and multiplied by the amount of energy of an auxiliary voltage pulse (P(U3)) per time unit, in order to determine the amount of auxiliary voltage energy (E3) summed during the time window (T).

11. Method according to any of claims 7 to 10, **characterized in that,** in the time window (T), a residual amount of energy is determined from a difference between the energy limit value (G) and the amount of ignition energy (E), and a determination is made, on the basis of the residual amount of energy, as to whether further auxiliary voltage pulses (P(U3)) and/or high-voltage pulses (P(U2)) will be prevented by a triggered action (A) in the time window (T).

12. Method according to any of claims 1 to 11, **characterized in that** the time window (T) is continuously shifted in real time, such that the end time point (Te) corresponds to the current time.

13. Method according to any of claims 1 to 12, **characterized in that,** as an action (A), the generation of further low-voltage pulses (P(U1)) and consequently high-voltage pulses (P(U2)) and/or auxiliary voltage pulses (P(U3)) is blocked.

14. Method according to any of claims 1 to 13, **characterized in that** the triggering of the action (A) is deactivated when the welding apparatus (100) is in a welding mode.

15. Energy limiting unit (5) for a welding apparatus (100) having a low-voltage side (21) and a high-voltage side (22), **characterized in that** the energy-limiting unit (5) comprises at least one energy determination unit (51) which is designed to determine an amount of ignition energy (E) occurring at an electrode (17) in an ignition mode and/or an idle mode and/or a welding mode of the welding apparatus (100) during a time window (T) which extends from a starting time point (Ta) to an end time point (Te), **in that** the energy limiting unit (5) comprises at least one energy comparison unit (52) which is designed to compare the amount of ignition energy (E) to a predetermined energy limit value (G), **and in that** the energy limiting unit (5) comprises at least one blocking unit (53) which is designed to trigger an action (A) when the energy limit value (G) is exceeded, in order to prevent an occurrence of further ignition energy at the electrode (17) in the time window (T).

16. Energy limiting unit (5) according to claim 15, **characterized in that** a detection unit (16) is provided, which is designed to distinguish the welding mode of the welding apparatus (100) from the ignition mode and/or idle mode of the welding apparatus (100), and to deactivate at least one energy determination unit (51) and/or at least one energy comparison unit (52) and/or at least one blocking unit (53) in the welding mode, and to activate it in the ignition mode and/or idle mode.

17. Welding apparatus (100) comprising a low-voltage source (Q1) which is designed to generate low-voltage pulses (P(U1)) on the low-voltage side (21), and comprising a transformation unit (20) for converting low-voltage pulses (P(U1)) to high-voltage pulses (P(U2)) applied to a high-voltage side (22) for igniting an arc between an electrode (17) and a workpiece (W), and comprising at least one energy limiting unit (5) according to either claim 15 or claim 16, wherein the blocking unit (53) is designed to prevent an occurrence of further ignition energy at the electrode (17), by the action (A) in the time window (T), in that further low-voltage pulses (P(U1)) on the low-voltage side (21) and/or high-voltage pulses (P(U2)) on the high-voltage side (22) and/or auxiliary voltage pulses (P(U3)) on the high-voltage side (22) are prevented.

## Revendications

1. Procédé permettant de faire fonctionner de manière sûre un poste à souder (100), dans lequel des impulsions basse tension (P(U1)) apparaissant sur un côté basse tension (21) du poste à souder (100) sont transformées en impulsions haute tension (P(U2)) apparaissant sur un côté haute tension (22) du poste à souder (100), dans lequel un arc (arc) est amorcé entre une électrode (17) et une pièce à usiner (W) pendant un mode de fonctionnement d'amorçage et/ou un mode de fonctionnement de marche à vide en utilisant les impulsions haute tension (P(U2)), **caractérisé en ce que,** en mode de fonctionnement d'amorçage et/ou en mode de fonctionnement de marche à vide et/ou en mode de fonctionnement de soudage, un laps de temps (T) s'étendant d'un moment de début (Ta) à un moment de fin (Te) est prévu, dans lequel une quantité d'énergie d'amorçage (E) apparaissant au niveau de l'électrode (17) est déterminée pendant le laps de temps (T) et comparée à une valeur limite d'énergie (G),
**et en ce qu'**une action (A) est déclenchée en cas de dépassement de la valeur limite d'énergie (G) afin d'empêcher d'autres impulsions haute tension (P(U2)) dans le laps de temps (T).

2. Procédé selon la revendication 1, **caractérisé en ce que,** pendant le laps de temps (T), une quantité d'énergie haute tension (E2) des impulsions haute tension (P(U2)) est additionnée, **et en ce que** la quantité d'énergie haute tension (E2) est utilisée afin de déterminer la quantité d'énergie d'amorçage (E) apparaissant au niveau de l'électrode.

3. Procédé selon la revendication 2, **caractérisé en ce que** la quantité d'énergie d'une impulsion haute tension (P(U2)) est prédéfinie, **et en ce que** les impulsions haute tension (P(U2)) apparaissant pendant le laps de temps (T) sont comptées et multipliées par la quantité d'énergie d'une impulsion haute tension (P(U2)) afin de déterminer la quantité d'énergie haute tension (E2) additionnée pendant le laps de temps (T).

4. Procédé selon la revendication 1, **caractérisé en ce que,** pendant le laps de temps (T), une quantité d'énergie basse tension (E1) des impulsions basse tension (P(U1)) est additionnée **et en ce que** la quantité d'énergie basse tension (E1) est utilisée afin de déterminer la quantité d'énergie d'amorçage (E) apparaissant au niveau de l'électrode.

5. Procédé selon la revendication 4, **caractérisé en ce que** la quantité d'énergie d'une impulsion basse tension (P(U1)) est prédéfinie, **et en ce que** les impulsions basse tension (P(U1)) apparaissant pendant le laps de temps (T) sont comptées et multipliées par la quantité d'énergie d'une impulsion basse tension (P(U1)) afin de déterminer la quantité d'énergie basse tension (E1) additionnée pendant le laps de temps (T).

6. Procédé selon la revendication 4, **caractérisé en ce que** la quantité d'énergie d'une impulsion basse tension (P(U1)) par unité de temps est prédéfinie, **et en ce que** la somme des durées d'impulsion des impulsions basse tension (P(U1)) apparaissant pendant le laps de temps (T) sont déterminées et multipliées par la quantité d'énergie d'une impulsion basse tension (P(U1)) par unité de temps afin de déterminer la quantité d'énergie basse tension (E1) additionnée pendant le laps de temps (T).

7. Procédé selon l'une des revendications 1 à 6, **caractérisé en ce que** des impulsions de tension auxiliaire (P(U3)) sont appliquées côté haute tension (22) afin d'aider à l'amorçage d'un arc (arc), **et en ce que,** pendant le laps de temps (T), une quantité d'énergie de tension auxiliaire (E3) des impulsions de tension auxiliaire (P(U3)) est additionnée afin de déterminer une quantité d'énergie de tension auxiliaire (E3), **en ce que** la quantité d'énergie de tension auxiliaire (E3) est utilisée afin de déterminer la quantité d'énergie d'amorçage (E) apparaissant au niveau de l'électrode (17) **et en ce que** d'autres impulsions de tension auxiliaire (P(U3)) sont empêchées par le déclenchement de l'action (A) dans le laps de temps (T).

8. Procédé selon la revendication 7, **caractérisé en ce que** les impulsions de tension auxiliaire (P(U3)) sont synchronisées dans le temps avec les impulsions haute tension (P(U2)) ou les impulsions haute tension (P(U2)) sont synchronisées dans le temps avec les impulsions de tension auxiliaire (P(U3)), de préférence superposées.

9. Procédé selon la revendication 7 ou 8, **caractérisé en ce que** la quantité d'énergie d'une impulsion de tension auxiliaire (P(U3)) est prédéfinie, **en ce que** les impulsions de tension auxiliaire (P(U3)) apparaissant pendant le laps de temps (T) sont comptées et multipliées par la quantité d'énergie d'une impulsion de tension auxiliaire (P(U3)) afin de déterminer la quantité d'énergie de tension auxiliaire (E3) additionnée pendant le laps de temps (T).

10. Procédé selon la revendication 7 ou 8, **caractérisé en ce que** la quantité d'énergie d'une impulsion de tension auxiliaire (P(U3)) par unité de temps est prédéfinie, **en ce que** la somme des durées d'impulsion des impulsions de tension auxiliaire (P(U3)) apparaissant pendant le laps de temps (T) sont déterminées et multipliées par la quantité d'énergie d'une impulsion de tension auxiliaire (P(U3)) par unité de temps afin de déterminer la quantité d'énergie de tension auxiliaire (E3) additionnée pendant le laps de temps (T).

11. Procédé selon l'une des revendications 7 à 10, **caractérisé en ce que,** dans le laps de temps (T), une quantité d'énergie résiduelle est déterminée à partir d'une différence entre la valeur limite d'énergie (G) et la quantité d'énergie d'amorçage (E), et on détermine à l'aide de la quantité d'énergie résiduelle si d'autres impulsions de tension auxiliaire (P(U3)) et/ou d'autres impulsions haute tension (P(U2)) sont empêchées ou non par une action (A) déclenchée dans le laps de temps (T).

12. Procédé selon l'une des revendications 1 à 11, **caractérisé en ce que** le laps de temps (T) est repoussé en continu en temps réel de sorte que le moment de fin (Te) corresponde au moment présent.

13. Procédé selon l'une des revendications 1 à 12, **caractérisé en ce que,** en tant qu'action (A), la génération d'autres impulsions basse tension (P(U1)) et, par conséquent, d'impulsions haute tension (P(U2)) et/ou d'impulsions de tension auxiliaire (P(U3)) est bloquée.

14. Procédé selon l'une des revendications 1 à 13, **caractérisé en ce que** le déclenchement de l'action (A) est désactivé lorsque le poste à souder (100) est en mode de fonctionnement de soudage.

15. Unité de limitation d'énergie (5) pour un poste à souder (100) comportant un côté basse tension (21) et un côté haute tension (22), **caractérisée en ce que** l'unité de limitation d'énergie (5) comprend au moins une unité de détermination d'énergie (51) qui est configurée pour déterminer, dans un mode de fonctionnement d'amorçage et/ou un mode de fonctionnement de marche à vide et/ou un mode de fonctionnement de soudage du poste à souder (100), pendant un laps de temps (T) qui s'étend d'un moment de début (Ta) à un moment de fin (Te), une quantité d'énergie d'amorçage (E) apparaissant au niveau d'une électrode (17), **en ce que** l'unité de limitation d'énergie (5) comprend au moins une unité de comparaison d'énergie (52) qui est configurée pour comparer la quantité d'énergie d'amorçage (E) à une valeur limite d'énergie (G) prédéfinie, **et en ce que** l'unité de limitation d'énergie (5) comprend au moins une unité de blocage (53) qui est configurée pour déclencher une action (A) en cas de dépassement de la valeur limite d'énergie (G) afin d'empêcher une apparition d'une autre énergie d'amorçage au niveau de l'électrode (17) dans le laps de temps (T).

16. Unité de limitation d'énergie (5) selon la revendication 15,
**caractérisée en ce qu'**une unité de détection (16) est prévue, laquelle est configurée pour distinguer le mode de fonctionnement de soudage du poste à souder (100) du mode de fonctionnement d'amorçage et/ou du mode de fonctionnement de marche à vide du poste à souder (100) et pour désactiver au moins une unité de détermination d'énergie (51) et/ou au moins une unité de comparaison d'énergie (52) et/ou au moins une unité de blocage (53) en mode de fonctionnement de soudage et pour les activer en mode de fonctionnement d'amorçage et/ou en mode de fonctionnement de marche à vide.

17. Poste à souder (100) comprenant une source basse tension (Q1) qui est configurée pour générer des impulsions basse tension (P(U1)) côté basse tension (21) et comprenant une unité de transformation (20) pour la conversion des impulsions basse tension (P(U1)) en impulsions haute tension (P(U2) disposées côté haute tension (22) pour l'amorçage d'un arc (arc) entre une électrode (17) et une pièce à usiner (W) et comprenant au moins une unité de limitation d'énergie (5) selon l'une des revendications 15 ou 16, dans lequel l'unité de blocage (53) est configurée pour empêcher, par l'action (A) dans le laps de temps (T), une apparition d'une autre énergie d'amorçage au niveau de l'électrode (17), en empêchant d'autres impulsions basse tension (P(U1)) côté basse tension (21) et/ou des impulsions haute tension (P(U2)) côté haute tension (22) et/ou des impulsions de tension auxiliaire (P(U3)) côté haute tension (22).
